(19) Europäisches Patentamt / European Patent Office / Office européen des brevets

(11) **EP 4 636 890 A2**

(12) **EUROPEAN PATENT APPLICATION**

(43) Date of publication:
22.10.2025 Bulletin 2025/43

(21) Application number: 25200516.0

(22) Date of filing: 07.10.2022

(51) International Patent Classification (IPC):
*H01M 10/0568* (2010.01)

(52) Cooperative Patent Classification (CPC):
H01M 10/0567; H01M 10/0568; H01M 2300/0037;
Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 24.03.2022 GB 202204201

(62) Document number(s) of the earlier application(s) in
accordance with Art. 76 EPC:
22790070.1 / 4 500 601

(71) Applicant: Faradion Limited
Sheffield, South Yorkshire S1 4DP (GB)

(72) Inventors:
• **Christopher, WRIGHT**
Sheffield, S1 4DP (GB)
• **RUDOLA, Ashish**
Sheffield, S1 4DP (GB)

(74) Representative: **The IP Asset Partnership Limited**
**Prama House**
**267 Banbury Road**
**Oxford OX2 7HT (GB)**

Remarks:
This application was filed on 05-09-2025 as a
divisional application to the application mentioned
under INID code 62.

(54) **ELECTROLYTE COMPOSITIONS**

(57) The invention relates to a non-aqueous electrolyte composition comprising one or more sodium-containing salts and a solvent system which comprises a first component which comprises one or more glyme-based solvents and a second component which comprises additives. The invention further relates to an anode-free sodium cell comprising said non-aqueous electrolyte compositions.

Figure 1a

Figure 1b

**Description**

<u>FIELD OF THE INVENTION</u>

The present invention relates to novel non-aqueous electrolyte compositions, an anode-free sodium cell comprising said novel non-aqueous electrolyte compositions and energy storage devices which include said anode-free sodium cells. The present invention further relates to a sodium-ion cell comprising said novel non-aqueous electrolyte compositions.

<u>BACKGROUND OF THE INVENTION</u>

Sodium-ion batteries are analogous in many ways to the lithium-ion batteries that are in common use today; they are both reusable secondary batteries that comprise an anode (negative electrode), a cathode (positive electrode) and an electrolyte material, both are capable of storing energy, and they both charge and discharge via a similar reaction mechanism. When a sodium-ion (or lithium-ion) battery is charging, $Na^+$ (or $Li^+$) ions deintercalate from the cathode and insert into the anode. Meanwhile charge balancing electrons pass from the cathode through the external circuit containing the charger and into the anode of the battery. During discharge the same process occurs but in the opposite direction.
Lithium-ion battery technology has enjoyed a lot of attention in recent years and provides the preferred portable battery for most electronic devices in use today. However, lithium is not a cheap metal to source and is considered too expensive for use in large scale applications. By contrast, sodium is much more abundant than lithium and some researchers predict this will provide a cheaper and more durable way to store energy into the future, particularly for large scale applications such as storing energy on the electrical grid.
A sodium-ion cell comprises an active material layer coated on a current collector foil to form a cathode, and a similar arrangement exists for a corresponding anode. The cathode and anode are physically separated by a separator which allows for a flow of ions within a liquid electrolyte medium, which is present uniformly within the cell and wets the entire cathode, anode and separator. During charging, $Na^+$ ions shuttle from the cathode active material and are inserted in the anode active material (electrons flow through the external circuit) and the reverse process occurs during discharging (sodium ions are extracted from the anode active material and are inserted into the cathode active material with the electrons flowing through the external circuit, doing the useful work).
In contrast, for "sodium cells", the anode is composed of sodium metal (either as standalone Na metal foil/sheet or as sodium metal foil/sheet laminated upon another current collector foil/sheet), with the cathode, separator and electrolyte being the same as that used in the above sodium-ion cell. Therefore, in "sodium cells", during each charge/discharge cycle, Na plating/stripping occurs on the Na metal foil (the cathode behaves in the same manner as that in sodium-ion cells).
However, as will be appreciated, using sodium metal as the anode may not be the most ideal candidate, especially from a battery production point of view. In addition, the plating and stripping process at the anode is rarely entirely reversible and dendritic growth occurs leading to early failure. Further still, sodium metal reacts violently with water and such a reaction could lead to an explosion during the manufacturing stage. Therefore, the use of sodium metal as an anode in a sodium battery would necessitate the use of an inert atmosphere which would be expected to significantly raise battery manufacturing costs.
Sodium-ion cells cannot currently compete with lithium-ion cells in terms of gravimetric energy density. However, sodium cells (using sodium metal as the anode as discussed above) could have higher energy densities than existing commercial lithium-ion cells, but these would be more expensive to manufacture due the reasons mentioned above. Thus, there remains a need to devise a room temperature rechargeable sodium containing cell which can achieve specific energy densities at par or better than existing commercial lithium-ion cells, while also being inexpensive and easy to manufacture.
WO 2018/151674 describes an "anode-free sodium cell" also called an *in-situ* sodium plated cell. An "anode-free cell sodium cell" refers to a cell in which the working principle of the anode-free sodium cell involves sodium metal cation ($Na^+$) extraction/insertion from the cathode active material, and sodium metal (Na) plating/stripping at an anode current collector. This working principle is different from a) a "sodium-ion cell" in which the working principle of the sodium-ion cell involves sodium metal cation ($Na^+$) extraction/insertion at a cathode active material and sodium metal cation ($Na^+$) extraction/insertion at an anode active material and b) a "sodium cell" in which the working principle of the sodium cell involves sodium metal cation ($Na^+$) extraction/insertion at a cathode active material, and sodium metal (Na) plating/stripping at a sodium metal anode.
In more detail, WO 2018/151674 demonstrated an "anode-free sodium cell" using an anode current collector that was "pristine" prior to an initial first charge cycle of the anode-free sodium cell; 1M $NaBF_4$ in tetraglyme as the electrolyte; and rhombohedral $Na_2Fe_2(CN)_6$ as a cathode active material. After the initial cycling, this anode-free sodium cell was able to deliver a capacity of approximately 90 mAh/g at an average discharge voltage of 3.22 V, and the cycling of such cell was quite stable, displaying capacity retention of approximately 76% of its initial values after 60 cycles.

US 2020/0058222 also describes an "anode-free sodium-cell". In this disclosure, an anode-free sodium cell was demonstrated using an anode current collector that comprised one or more carbon nucleation layers prior to an initial first charge cycle of the anode-free sodium cell; 1M NaPF$_6$ as the electrolyte; and pre-sodiated FeS$_2$ as the cathode active material. Such pre-sodiation is an expensive and difficult process to conduct, and therefore the commercial utility of this disclosure is doubtful.

One area that needs more attention is the development of suitable electrolyte compositions, particularly for anode-free sodium cells.

Although the design of suitable electrolyte compositions is given less attention than active materials (electrodes), their importance should not be overlooked as they are in large part the key to battery life and for determining the practical performance achievable by a cell, for example in terms of capacity, rate capability, safety etc.

However, to be a suitable electrolyte composition, it must fulfil a long list of attributes, these include:

- Chemical stability - there must be no significantly adverse reactions during the cell operation, including within the electrolyte itself or with the separator, the electrodes, current collectors or the packaging materials used;
- Electrochemical stability - there must be a wide electrochemical stability window i.e. a large separation between the high and low onset potentials for decomposition by oxidation or reduction;
- Thermal stability - the electrolyte composition must not decompose or chemically break down during normal cell operation and operational temperature;
- Physical properties - the electrolyte composition needs to be liquid therefore its melting and boiling points must be well outside the internal operating temperatures of the cell;
- High ionic and low electronic conductivities are necessary to maintain cell operation by Na$^+$ transport and to minimize self-discharge of the cell, respectively;
- Low toxicity;
- Based on sustainable chemistries, i.e. made using abundant elements and via low impact syntheses (energy, pollution etc.); and
- Cost effective production.

The aim of the present invention therefore is to provide improved sodium ion conducting electrolyte compositions (that is, they are electrolyte compositions which are particularly designed for use in anode-free sodium cells). The electrolyte compositions of the present invention will be cost effective and will demonstrate excellent electrochemical performance, particularly in anode-free sodium cells. The electrolyte compositions of the present invention may also have utility in sodium-ion cells.

## SUMMARY OF THE INVENTION

The present invention achieves these aims by providing: a non-aqueous electrolyte composition comprising: one or more sodium-containing salts; and a solvent system which comprises: a first component which comprises one or more glyme-based solvents; and a second component which comprises (or optionally consists essentially of) one or more additives selected from:

- sulfur-containing compounds in an amount of no greater than about 10% by weight of the solvent system;
- boron-containing compounds in an amount of no greater than about 20% by weight of the solvent system;
- nitrile-containing compounds in an amount of no greater than about 10% of the solvent system;
- phosphorous-containing compounds in an amount of no greater than about 10% by weight of the solvent system;
- surfactants in an amount of no greater than about 20% by weight of the solvent system; and optionally

wherein the total amount of the one or more additives does not exceed about 20% by weight of the solvent system, ideally about 17.5% by weight of the solvent.

For the avoidance of any doubt, when the one or more additives comprise combinations of compounds as indicated then the amounts of such compounds apply as indicated. For instance, TEL 66X is not according to the present invention because it contains sulfur-containing compounds in amount of 15 wt% by weight of the solvent system. That is, it does not satisfy "sulfur-containing compounds in an amount of no greater than about 10% by weight of the solvent system".

Preferably, the second component comprises (or optionally consists essentially of) one or more additives selected from:

- sulfur-containing compounds in an amount of no greater than about 5% by weight of the solvent system, preferably no greater than about 3% by weight, highly preferably no greater than about 2.5 % by weight;

- boron-containing compounds in an amount of no greater than about 15% by weight of the solvent system, preferably no greater than about 8.5% by weight, highly preferably no greater than about 5% by weight;
- nitrile-containing compounds in an amount of no greater than about 10% of the solvent system, preferably no greater than about 5% by weight;
- phosphorous-containing compounds in an amount of no greater than about 10% by weight of the solvent system; preferably no greater than about 5% by weight;
- surfactants in an amount of no greater than 20% by weight of the solvent system, preferably in an amount of no greater than about 10% of the solvent system, preferably no greater than about 8.5% by weight; and optionally

wherein the total amount of the one or more additives does not exceed about 20% by weight of the solvent system, ideally about 16.5 % by weight of the solvent system.

Optionally, the total amount of the one or more additives does not exceed about 30% by weight of the solvent system.

In one aspect, the present invention provides a non-aqueous electrolyte composition comprising: one or more sodium-containing salts; and a solvent system which comprises: a first component which comprises one or more glyme-based solvents; and a second component as defined herein.

The second component may comprise or consist essentially of one or more additives selected from sulfur-containing compounds, boron-containing compounds, nitrile-containing compounds, phosphorous-containing compounds, and surfactants.

Preferably, the second compound may comprise or consist essentially of one or more additives selected from sulfur-containing compounds in an amount of >0 to $\leq$10% by weight of the solvent system.

The sulfur-containing compounds may be present in an amount of >0.1 to $\leq$10% by weight of the solvent system, preferably $\geq$0.2 to $\leq$ 9% by weight of the solvent system, further preferably $\geq$0.3 to $\leq$5wt%, very preferably $\geq$0.4 to $\leq$4wt%, more preferably, 0.5wt% to $\leq$2.5wt%, and ideally 0.5wt% to $\leq$2wt%.

More preferably, the second component may comprise or consist essentially of one or more additives selected from boron-containing compounds in an amount of >0 to $\leq$20% by weight of the solvent system.

The boron-containing compounds may be present in an amount of >0 to $\leq$15% by weight of the solvent system, and preferably of >0.4 to $\leq$ 9% by weight of the solvent system, and more preferably of >1 to $\leq$ 8.5% by weight of the solvent system.

Alternatively, the second component may comprise or consist essentially of one or more additives selected from nitrile-containing compounds in an amount of >0 to $\leq$20% by weight of the solvent system.

The nitrile-containing compounds may be present in an amount of >0.1 to 15% by weight of the solvent system, preferably $\geq$0.2 to $\leq$ 9% by weight of the solvent system, further preferably $\geq$0.3 to $\leq$5wt%, very preferably $\geq$0.4 to $\leq$4wt% and ideally 0.5wt% to $\leq$3wt%.

Alternatively, the second component may comprise or consist essentially of one or more additives selected from phosphorous-containing compounds in an amount of >0 to $\leq$20% by weight of the solvent system.

The phosphorous-containing compounds may be present in an amount of >0.1 to $\leq$15% by weight of the solvent system, preferably $\geq$0.2 to $\leq$ 9% by weight of the solvent system, further preferably $\geq$0.3 to $\leq$5wt%, very preferably $\geq$0.4 to $\leq$4wt% and ideally 0.5wt% to $\leq$4wt%.

Alternatively, the second component may comprise or consist essentially of one or more additives selected from surfactants in an amount of >0 to $\leq$20% by weight of the solvent system.

The surfactants may be present in an amount of >0.1 to $\leq$15% by weight of the solvent system, and preferably of $\geq$0.1 to $\leq$ 9% by weight of the solvent system, and more preferably of $\geq$0.5 to $\leq$ 7.5% by weight of the solvent system.

The second component may comprise or consist essentially of two or more additives.

Preferably, the second component may comprise or consist essentially of two or more additives comprising: boron-containing compounds and surfactants. That is, one or more boron-containing compounds may be mixed with one or more surfactants to provide a mixture of two or more additives as a second component of the solvent system.

The second component may comprise two or more additives comprising boron-containing compounds in an amount of >0 to <20% by weight of the solvent system and surfactants in an amount of >0 to < 20% by weight of the solvent system. It is preferable in this embodiment that the total amount of two or more additives does not exceed about 20% by weight based on the weight of the solvent system.

The second component may comprise two or more additives comprising boron-containing compounds in an amount of $\geq$0.5 to <20% by weight of the solvent system and surfactants in an amount of $\geq$0.5 to < 15% by weight of the solvent system.

Optionally, the total amount of two or more additives does not exceed about 20% by weight based on the weight of the solvent system.

The second component may comprise two or more additives comprising boron-containing compounds in an amount of $\geq$0.5 to <10% by weight of the solvent system and surfactants in an amount of $\geq$0.5 to <10% by weight of the solvent system.

Optionally, the total amount of two or more additives does not exceed about 10% by weight based on the weight of the solvent system.

The second component may comprise two or more additives comprising boron-containing compounds in an amount of ≥0.5 to <5% by weight of the solvent system and surfactants in an amount of >0.5 to < 5% by weight of the solvent system.

Optionally, the total amount of two or more additives does not exceed about 5% by weight based on the weight of the solvent system.

The second component may comprise two or more additives comprising boron-containing compounds in an amount of about 2 wt% by weight of the solvent system and surfactants in an amount of about 1 wt% by weight of the solvent system. Optionally, in this embodiment the total amount of two or more additives does not exceed about 3% by weight based on the weight of the solvent system.

Alternatively, the second component may comprise or consist essentially of two or more additives comprising: sulfur-containing compounds and surfactants. That is, one or more sulfur-containing compounds may be mixed with one or more surfactants to provide a mixture of two or more additives as a second component of the solvent system.

Further alternatively, the second component may comprise or consist essentially of two or more additives comprising: sulfur-containing additives and boron-containing additives. That is, one or more sulfur-containing compounds may be mixed with one or more boron-containing compounds to provide a mixture of two or more additives as a second component of the solvent system.

The second component may comprise or consist essentially of three or more additives.

Preferably, the second component may comprise or consist essentially of three or more additives comprising:

sulfur-containing compounds;
boron-containing compounds; and
surfactants.

That is, one or more sulfur-containing compounds may be mixed with one or more boron-containing compounds and one or more surfactants to provide a mixture of three or more additives.

The second component may comprise three or more additives comprising:

sulfur-containing compounds in an amount of >0 to <10% by weight of the solvent system,
boron-containing compounds in an amount of >0 to <20% by weight of the solvent system, and
surfactants in an amount of >0 to < 20% by weight of the solvent system.

The second component may comprise three or more additives comprising:

sulfur-containing compounds in an amount of >0 to <10% by weight of the solvent system,
boron-containing compounds in an amount of >0 to <10% by weight of the solvent system, and
surfactants in an amount of >0 to < 10% by weight of the solvent system.

The second component may comprise three or more additives comprising:

sulfur-containing compounds in an amount of ≥0.5 to <10% by weight of the solvent system,
boron-containing compounds in an amount of ≥0.5 to <10% by weight of the solvent system, and
surfactants in an amount of ≥0.5 to < 10% by weight of the solvent system.

Optionally, the total amount of three or more additives does not exceed about 20% by weight based on the weight of the solvent system.

The second component may comprise three or more additives comprising:

sulfur-containing compounds in an amount of >0 to <5% by weight of the solvent system,
boron-containing compounds in an amount of >0 to <5% by weight of the solvent system, and
surfactants in an amount of >0 to < 5% by weight of the solvent system.

Alternatively, the second component may comprise three or more additives comprising:

sulfur-containing compounds in an amount of ≥0.5 to <5% by weight of the solvent system,
boron-containing compounds in an amount of ≥0.5 to <5% by weight of the solvent system,
and
surfactants in an amount of >0 to < 5% by weight of the solvent system.

It is preferable that the total amount of three or more additives does not exceed about 10% by weight based on the weight of the solvent system.

It is more preferable that the total amount of three or more additives does not exceed about 5% by weight based on the weight of the solvent system.

The second component may comprise three or more additives comprising:

sulfur-containing compounds in an amount of about 2% by weight of the solvent system,
boron-containing compounds in an amount of about 1% by weight of the solvent system, and
surfactants in an amount of about 1% by weight of the solvent system.

The total amount of the three or more additives may be about 4% by weight based on the weight of the solvent system.

The second component may comprise three or more additives comprising:

sulfur-containing compounds in an amount of about 0.5% by weight of the solvent system,
boron-containing compounds in an amount of about 2% by weight of the solvent system, and
surfactants in an amount of about 1% by weight of the solvent system.

The total amount of the three or more additives may be about 3.5% by weight based on the weight of the solvent system.

The second component may comprise three or more additives comprising:

sulfur-containing compounds in an amount of >0 to ≤2.5% by weight of the solvent system,
boron-containing compounds in an amount of >0 to ≤15% by weight of the solvent system,
and
surfactants in an amount of >0 to ≤2.5% by weight of the solvent system.

Optionally, the total amount of three or more additives does not exceed about 20% by weight based on the weight of the solvent system.

The second component may comprise three or more additives comprising:

sulfur-containing compounds in an amount of >0 to ≤2.5% by weight of the solvent system,
boron-containing compounds in an amount of >0 to ≤2.5% by weight of the solvent system,
and surfactants in an amount of >0 to ≤15% by weight of the solvent system.

Optionally, the total amount of three or more additives does not exceed about 20% by weight based on the weight of the solvent system.

Alternatively, the second component may comprise or consist essentially of three or more additives comprising:

nitrile-containing compounds;
boron-containing compounds; and
surfactants.

That is, one or more nitrile-containing compounds may be mixed with one or more boron-containing compounds and one or more surfactants to provide a mixture of three or more additives.

The second component may comprise three or more additives comprising:

nitrile-containing compounds in an amount of >0 to <5% by weight of the solvent system,
boron-containing compounds in an amount of >0 to <5% by weight of the solvent system, and
surfactants in an amount of >0 to <5% by weight of the solvent system.

Optionally, the total amount of three or more additives does not exceed about 5% by weight based on the weight of the solvent system.

The second component may comprise or consist essentially of four or more additives comprising:

sulfur-containing compounds;
nitrile-containing compounds;
boron-containing compounds; and
surfactants.

That is, one or more sulfur-containing compounds may be mixed with one or more nitrile-containing compounds, one or more boron-containing compounds, and one or more surfactants to provide a mixture of four or more additives.

The second component may comprise four or more additives comprising:

sulfur-containing compounds in an amount of >0 to <5% by weight of the solvent system,
nitrile-containing compounds in an amount of >0 to <5% by weight of the solvent system,
boron-containing compounds in an amount of >0 to <5% by weight of the solvent system, and
surfactants in an amount of >0 to <5% by weight of the solvent system.

Optionally, the total amount of four or more additives does not exceed about 20% by weight based on the weight of the solvent system.

Optionally, the total amount of four or more additives does not exceed about 10% by weight based on the weight of the solvent system.

Optionally, the total amount of four or more additives does not exceed about 5% by weight based on the weight of the solvent system.

In another aspect, the present invention provides a non-aqueous electrolyte composition consisting essentially of: one or more sodium-containing salts; and a solvent system which consists essentially of: a first component which consists essentially of one or more glyme-based solvents; and a second component as defined herein.

The one or more sodium-containing salts of the present invention may be defined as described herein.

The one or more sodium-containing salts (a) preferably comprise one or more weakly coordinating anions. The term "weakly coordinating anion" or "WCA" is well known to those skilled in the art and is used to refer to anions which comprise several (more than one) elements, which may contain halogen atoms and/or oxygen atoms, and which share a single negative charge. This means that the negative charge is spread out over the anion and makes the coordinating ability of the anion comparatively weak, for example relative to the coordinating ability of an anion which has a concentrated negative charge or one with multiple negative charges.

Preferably, the sodium-containing salt is selected from one or more compounds of the formula $NaM_mX_x$; one or more compounds of the formula $NaXO_4$; sodium salts of one or more fluoro sulfonyl-containing compounds; sodium salts of one or more fluoro sulfonate-containing compounds; sodium salts of one or more oxalato borate compounds; sodium salts of one or more difluoro-oxalato borate compounds; and one or more compounds that contain a tetrahedral anion such as tetrakis[3,5-bis(trifluoromethyl)phenylborate anion $(B[3,5-(CF_3)_2C_6H_3]^-_4)$, tris(pentafluorophenyl)borate anion $(B(C_6F_5)^-_4)$, and tetrakis carboxy (trifluoromethyl)aluminate anion $(Al[OC(CF_3)_3]^-_4)$.

Highly preferably, the one or more sodium-containing salts are selected from: one or more compounds of the formula $NaM_mX_x$; wherein M is one or more metals and/or non-metals, and X is a group that comprises or consists of one or more halogens; sodium salts of one or more fluoro sulfonyl-containing compounds; sodium salts of one or more fluoro sulfonate-containing compounds; sodium salts of one or more oxalato borate compounds; and sodium salts of one or more difluoro-oxalato borate compounds.

In the preferred one or more sodium-containing salts of the formula $NaM_mX_x$, M is one or more metals and/or non-metals and X is a group that comprises or consists of one or more halogens, preferably selected from fluorine, chlorine, bromine and iodine, further preferably fluorine. The amount x of halogen X is preferably x=1 to 16, further preferably x=4 or 6. The amount, m, of the one or more metals and/or non-metals, M, is preferably m=1 to 3, further preferably m=1 to 2, and particularly preferably m=1. Ideally, the one or more metals and/or non-metals, M, is preferably selected from aluminium, boron, gallium, indium, iridium, platinum, scandium, Yttrium, lanthanum, antimony, arsenic and phosphorus. Particularly preferably, M is selected from aluminium, boron, gallium, phosphorus and arsenic. The most preferred sodium-containing salts of the general formula $NaM_nX_x$ are one of more selected from sodium tetrafluoroborate $(NaBF_4)$, sodium hexa-fluorophosphate $(NaPF_6)$.

In the preferred one or more sodium compounds of the formula $NaXO_4$, the element X is preferably one or more halogens selected from fluorine, chlorine, bromine and iodine. Chlorine is particularly preferred, and the most preferred sodium-containing salt of the formula $NaXO_4$ is $NaClO_4$. Preferred sodium salts of one or more fluoro sulfonyl-containing compounds include sodium Bis(fluorosulfonyl)imide also known as NaFSI $(Na N(SO_2F)_2)$ and sodium Bis(trifluoromethanesulfonyl)imide also known as NaTFSI $(C_2F_6NNaO_4S_2)$. Preferred sodium salts of one or more one or more fluoro sulfonate-containing compounds include sodium trifluoromethanesulfonate, also known as sodium triflate or NaOTf

(CF$_3$NaSO$_3$). Preferred sodium salts of one or more oxalate borate compounds include sodium bis(oxalate), also known as borate NaBOB or NaB(C$_2$O$_4$)$_2$; and sodium-difluoro(oxalato)borate, also known as NaDFOB.

Highly preferably, the one or more sodium-containing salts are selected from sodium tetrafluoroborate (NaBF$_4$), sodium hexafluorophosphate (NaPF$_6$), sodium trifluoromethanesulfonate (CF$_3$NaSO$_3$), sodium bis(fluorosulfonyl)imide (Na(SO$_2$F)$_2$N), sodium bis(trifluoromethanesulfonyl)imide (C$_2$F$_6$NNaO$_4$S$_2$), sodium bis(oxalate) (NaB(C$_2$O$_4$)$_2$), and sodium-difluoro(oxalato)borate. Most preferably, the one or more sodium-containing salt is sodium tetrafluoroborate (NaBF$_4$).

It is convenient to express the amount of the one or more sodium-containing salts in terms of its molality of the components in the solvent system; that is, the total number of moles of the one or more sodium-containing salts (i.e. solute), per kilogram of the solvent system (the combined weight of the first component and the second component) - i.e. mol/kg.

Preferably, the molality of each of the sodium-containing salt individually is in the range 0.1 mol/kg to 5 mol/kg, and further preferably in the range 0.1 mol/kg to ≤2.5 mol/kg. Highly preferably, particularly when the component is NaBF$_4$, the molality is in the range 0.1 mol/kg to ≤ 2.5 mol/kg, and most preferably about 1.5 mol/kg. The total molality of all of the sodium-containing salts is preferably in the range 0.1 mol/kg to 10 mol/kg, and more preferably in the range 0.1 mol/kg to 6 mol/kg, and most preferably in the range 0.1 mol/kg to ≤ 4 mol/kg.

The one or more glyme-based solvents of the present invention may be defined as described herein.

The one or more glyme-based solvents present in the first solvent component may be saturated non-cyclic polyethers preferably containing no other functional groups. Glymes are also known as glycol diethers. Suitable glyme-based solvents may be selected from: ethylene glycol dimethyl ether (monoglyme CH$_3$-O-CH$_2$CH$_2$-O-CH$_3$); diethylene glycol dimethyl ether (diglyme CH$_3$-O-(CH$_2$-CH$_2$-O)$_2$-CH$_3$); triethylene glycol dimethyl ether (triglyme, CH$_3$-O-(CH$_2$CH$_2$-O)$_3$-CH$_3$); tetraethylene glycol dimethyl ether (tetraglyme, CH$_3$-O-(CH$_2$CH$_2$-O)$_4$-CH$_3$); ethylene glycol diethyl ether (ethyl glyme, CH$_3$CH$_2$-O-CH$_2$CH$_2$-O-CH$_2$CH$_3$); diethylene glycol diethyl ether (ethyl diglyme, CH$_3$CH$_2$-O-(CH$_2$CH$_2$-O)$_2$-CH$_2$CH$_3$); ethylene glycol dibutyl ether (butyl glyme, CH$_3$CH$_2$CH$_2$CH$_2$-O-CH$_2$CH$_2$-O-CH$_2$CH$_2$CH$_3$); diethylene glycol dibutyl ether (butyl diglyme, CH$_3$CH$_2$CH$_2$CH$_2$-O-(CH$_2$CH$_2$-O)$_2$-CH$_2$ CH$_2$CH$_2$CH$_3$); poly(ethylene glycol) dimethyl ether (polyglyme, CH$_3$-O-(CH$_2$CH$_2$ -O)$_n$-CH$_3$); and dipropylene glycol dimethyl ether (proglyme, CH$_3$-O-(CH$_2$CH$_2$CH$_2$-O)$_2$-CH$_3$).

Highly suitable glyme-based solvents may be selected from ethylene glycol dimethyl ether (monoglyme), diethylene glycol dimethyl ether (diglyme), triethylene glycol dimethyl ether (triglyme) and tetraethylene glycol dimethyl ether (tetraglyme). Diethylene glycol dimethyl ether (diglyme) and tetraethylene glycol dimethyl ether (tetraglyme) are especially preferred glyme-based solvents.

Preferred non-aqueous electrolyte compositions of the present invention comprise a solvent system which comprises a first component that consists essentially of diglyme and/or tetraglyme.

Alternatively, non-aqueous electrolyte compositions of the present invention comprise a solvent system which comprises a first component which consists essentially of diglyme and/or tetraglyme in combination with one or more further glyme-based compounds.

When a mixture of glyme-based compounds is used, it is convenient to express the amount of each of the one or more glyme-based solvents in terms of a weight ratio. For example, as discussed above, a highly preferred glyme-based solvent might contain a mixture of diglyme and tetraglyme, and this would ideally be in the weight ratio 1 to 20: 1 to 20 wt/wt, further preferably in the weight ratio 1 to 10 : 1 to 10 wt/wt, also preferably 1 to 5 : 1 to 5 wt/wt, and most preferably in the weight ratio 1:1 wt/wt.

Extremely advantageous electrolyte compositions of the present invention include one or more glyme-based solvents in an amount of at least about 40%, preferably at least about 50%, further preferably at least about 60%, by weight of the glyme-based solvent (i.e., the first component of the solvent system).

For the avoidance of any doubt, the phase "weight of the solvent system" as used herein means the weight of the first component of the solvent system combined with the weight of the second component of the solvent system.

Highly preferably, diglyme and tetraglyme are used in a 50% by weight combination as the glyme-based solvent. That is:

diglyme is present in an amount of about 50% by weight of the first component of the solvent system; and
tetraglyme is present in an amount of about 50% by weight of the first component of the solvent system.

Thus, the total amount of diglyme and tetraglyme is preferably about 100% by weight of the first component of the solvent system.

As discussed above, the non-aqueous electrolyte composition according to the present invention may include one or more surfactants. The one or more surfactants of the present invention may be defined as described herein.

The total amount of the one or more surfactants used in an electrolyte composition of the present invention, maybe >0.2 to ≤20% by weight of the solvent system, preferably ≥0.2 to ≤ 10% by weight of the solvent system, further

preferably $\geq 0.2$ to $\leq 4$wt%, very preferably $\geq 0.5$ to $\leq 3$wt% and ideally 0.5wt% to $\leq 2.5$wt%, based on the total weight of the electrolyte solvent system used in the electrolyte composition.

The amount of the one or more surfactants used in the second component of the electrolyte composition of the present invention, maybe >0 wt% weight of the solvent system, ideally >0.2 wt% weight of the solvent system, preferably >0.5 wt%, based on the total weight of the electrolyte solvent system used in the electrolyte composition.

In a preferred embodiment, the one or more surfactant additives used in the second component of the present invention are preferably selected to enhance the ability of the electrolyte composition to wet the separator (particularly a polyolefin separator) and/or the electrode of the battery which, in turn, advantageously promotes a longer battery cycle life. Furthermore, it is known in the literature that surfactants, by virtue of their surface-adsorption on different substrates, can lead to non-dendritic metal plating/stripping (and also inhibit corrosion). Preferred one or more surfactant additives are selected from anionic surfactants, cationic surfactants, non-ionic (hydrophilic) surfactants and amphoteric (zwitterionic) surfactants, with anionic surfactants and non-ionic (hydrophilic) surfactants being especially preferred. Such surfactants additives are ideally one or more selected from:

1) anionic (negatively charged) surfactants. Suitable examples include: carboxylates (such as alkyl carboxylates (e.g. fatty acid salts)), carboxylate fluoro-surfactants; sulfates (such as alkyl sulfates (e.g. sodium lauryl sulfate), alkyl ether sulfates (e.g. sodium laureth sulfate)); sulfonates (such as docusates (e.g. dioctyl sodium sulfosuccinate) and alkyl benzene sulfonates); and phosphate esters (such as alkyl aryl ether phosphates and alkyl ether phosphates (e.g. trioctyl phosphate);

2) Zwitterionic (amphoteric) surfactants, which can be anionic, cationic or non-ionic depending on the pH of the solution they are in. Examples include: $RN^+H_2CH_2COO^-$, $RN^+(CH_3)_2CH_2CH_2SO_3^-$, phospholipids (such as phosphatidylcholine (lecithin));

3) Cationic surfactants which bear a positive charge for example $RN^+H_3Cl^-$, $RN^+ (CH_3)_3Cl^-$, diotadecyldimethylammonium chloride, cetyl pyridinium chloride, benzalkonium chloride, hexadecyl trimethylammonium chloride (CTAC) and hexadecyl trimethylammonium bromide (CTAB); and

4) Non-ionic surfactants. These are uncharged, and examples include: polyol esters (e.g. glycol, glycerol esters, sorbitan and sorbitan derivatives such as fatty acid esters of sorbitan (Spans, Span®) and their ethoxylated derivatives (Tweens, Tween®)), polyoxyethylene esters and poloxamers which comprise block copolymers, for example Poloxamer 84, Poloxamer 105, Poloxamer 123, Poloxamer 124, Poloxamer 188, Poloxamer 237, Poloxamer 338, Poloxamer 407 and Poloxamer F127.

Most preferably, the surfactants of the non-aqueous electrolyte composition of the present invention contain one or more non-ionic block copolymer-containing surfactants, and/or anionic phosphate ester containing surfactants. Highly suitable examples include poloxamers and/or alkyl ether phosphates (e.g. trioctyl phosphate) as mentioned above.

As discussed above, the non-aqueous electrolyte composition according to the present invention may include one or more sulfur-containing compounds. The one or more sulfur-containing compounds of the present invention may be defined as described herein.

The sulfur-containing compounds used in the second solvent component of the present invention are preferably selected to enable the formation of a stable cathode-electrolyte interphase (CEI) on the cathode and/or a stable solid-electrolyte interphase (SEI) on the anode, which in turn leads to advantages such as enhanced 1st cycle coulombic efficiencies (FCE = first cycle coulombic efficiency) and cycle life enhancement; alternatively, such additives might decompose significantly preferentially in the first cycle, which might lead to a low first cycle efficiency, but then improves subsequent cycling stability.

Suitable sulfur-containing compounds may include cyclic and/or non-cyclic sulfur-containing compounds.

Preferably, the sulfur-containing compound is a sulfone, a sulfate, or a sulfonate.

In other words, the sulfur-containing compound may have a sulfonyl functional group which is attached to: two carbon atoms (sulfone), two oxygen atoms (sulfate), or one carbon atom and one oxygen atom in a cyclic or non-cyclic structure (sulfonate). When the sulfonate is cyclic, the compound may be referred to as a sultone.

As used herein the term "sulfone" means that the central hexavalent sulfur atom is doublybonded to each of two oxygen atoms and has a single bond to each of two carbon atoms.

As used herein the term "sulfate" means that the central hexavalent sulfur atom is doublybonded to two of the oxygen atoms and has a single bond to the other two oxygen atoms, which are each further singly bonded to carbon atoms.

As used herein the term "sulfonate" means that the central hexavalent sulfur atom is doublybonded to two of the oxygen atoms; it has a single bond to one carbon atom; and a single bond to the other oxygen atom, which is further singly bonded to a carbon atom, which if cyclically connected to the other carbon atom bonded to the sulfur atom, would be a sultone.

The general formula of such compounds is $RY(S=O)_2Y'R'$, in which:

- Y and Y' is independently selected from C or O (i.e. they may be the same or different from each other);
- when Y and Y' are the same, R and R' may be independently selected (i.e. they may be the same or different from each other) from any straight or branched, substituted or unsubstituted $C_1$ to $C_6$-alkyl group; a straight or branched, substituted or unsubstituted $C_1$ to $C_6$-alkenyl group; a straight or branched, substituted or unsubstituted $C_1$ to $C_6$alkoxy group; or wherein R and R' may independently or together form a substituted or unsubstituted $C_3$-$C_6$-cycloalkyl-, phenyl- or heterocycle-containing group; and
- when Y and Y' are different from each other, R' may be independently selected from any straight or branched, substituted or unsubstituted $C_1$ to $C_6$-alkyl group; a straight or branched, substituted or unsubstituted $C_1$ to $C_6$-alkenyl group; a straight or branched, substituted or unsubstituted $C_1$ to $C_6$-alkoxy group; or wherein R and R' may independently or together form a substituted or unsubstituted $C_3$-$C_6$-cycloalkyl-, cycloalkenyl-, phenyl- or heterocycle-containing group.

In some embodiments, the general formula of such compounds is R-$SO_2$-R', in which R and R' may be independently selected (i.e. they may be the same or different from each other) from any straight or branched, substituted or unsubstituted $C_1$ to $C_6$-alkyl group; a straight or branched, substituted or unsubstituted $C_1$ to $C_6$-alkenyl group; a straight or branched, substituted or unsubstituted $C_1$ to $C_6$-alkoxy group; or wherein R and R' may independently or together form a substituted or unsubstituted $C_3$-$C_6$-cycloalkyl-, phenyl- or heterocycle-containing group.

Preferably, the general formula of such compounds is RO(S=O)$_2$OR', in which R and R' may be independently selected (i.e. they may be the same or different from each other) from any straight or branched, substituted or unsubstituted $C_1$ to $C_6$-alkyl group; a straight or branched, substituted or unsubstituted $C_1$ to $C_6$-alkenyl group; a straight or branched, substituted or unsubstituted $C_1$ to $C_6$-alkoxy group; or wherein R and R' may independently or together form a substituted or unsubstituted $C_3$-$C_6$-cycloalkyl-, phenyl- or heterocycle-containing group.

Highly preferably, the sulfur-containing compound is selected from a cyclic sulfate (such as 1,3-propanediolcyclic sulfate (PCS) also known as 1,3,2-Dioxathiane 2,2-dioxide (DTD or $(CH_2)_3SO_4$))); 1,5,2,4-dioxadithiane 2,2,4,4-tetraoxide; or 1,3,2-Dioxathiolane 2,2-dioxide. 1,3-propanediolcyclic sulfate (PCS) is especially preferred.

Suitable examples of cyclic sulfones include: sulfolane ($(CH_2)_4SO_2$), 3-methyl sulfolane ($(CH_3)CH(CH_2)_3SO_2),$), and trimethyl sulfone ($(CH_2)_3SO_2$). Suitable examples of non-cyclic sulfones include: methyl phenyl sulfone ($(CH_3)(C_6H_5)SO_2$).

Suitable examples of examples of sultones include: 1-propene 1,3-sultone ($(CH)_2CH_2SO_3$), and 1,3-propane sultone $(CH_2)_3SO_3$,

The total amount of the one or more sulfur-containing compounds used in an electrolyte composition of the present invention may be >0.5 to ≤10% by weight of the solvent system, preferably ≥0.6 to ≤ 6% by weight of the solvent system, further preferably ≥0.6 to ≤4wt%, very preferably ≥0.6 to ≤3wt% and ideally 0.6wt% to ≤2.5wt%, based on the total weight of the electrolyte solvent system used in the electrolyte composition.

The amount of the one or more sulfur-containing compounds used in the second component of the electrolyte composition of the present invention, may be >0 wt% weight of the solvent system, ideally >0.2 wt% weight of the solvent system, preferably >0.5 wt%, based on the total weight of the electrolyte solvent system used in the electrolyte composition.

As discussed above, the non-aqueous electrolyte composition according to the present invention may include one or more boron-containing compounds. The one or more boron-containing compounds of the present invention may be defined as described herein.

The boron-containing compounds used in the second solvent component of the present invention are preferably selected to enable the formation of a stable cathode-electrolyte interphase (CEI) on the cathode and/or a stable solid-electrolyte interphase (SEI) on the anode, which in turn leads to advantages such as enhanced 1st cycle coulombic efficiencies and/or cycle life enhancement.

Suitable boron-containing compounds may include cyclic and/or non-cyclic boron-containing compounds.

Preferably, the one or more boron-containing compound is a borate or a boroxine.

In other words, the one or more boron-containing compound may have a central boron atom which is attached to three oxygen atoms, which are each further singly bonded to carbon or silicon atoms (borate). Or the one or more boron-containing compound may comprise a 6 membered heterocyclic structure which is composed of three alternating boron atoms and oxygen atoms joined together by a shared single bond. Each boron atom is further singly bonded to a carbon atom or oxygen external to the heterocyclic structure.

As used herein the term "borate" means that the central trivalent boron atom is singly bonded to three oxygen atoms, which are each further singly bonded to carbon or silicon atoms.

As used herein the term "boroxine" means a 6 membered heterocyclic compound that is composed of singly bonded alternating trivalent boron atoms and divalent oxygen atoms, each boron atom being further singly bonded to an oxygen or carbon atom external to the heterocyclic structure.

The general formula of such borate compounds is B(OYR)$_3$, in which Y and R may be the same or vary in each individual attachment case. More specifically this may be written as:
B(OYR)(OY'R')(OY"R"), in which

- Y, Y', and Y" is independently selected from C or Si (i.e. they may be the same or different from each other); and
- R, R', and R" may be independently selected from hydrogen; any straight or branched, substituted or unsubstituted $C_1$ to $C_6$-alkyl group; a straight or branched, substituted or unsubstituted $C_1$ to $C_6$-alkenyl group; a straight or branched, substituted or unsubstituted $C_1$ to $C_6$-alkoxy group; or a substituted or unsubstituted $C_3$-$C_6$-cycloalkyl, phenyl- or heterocycle-containing group.

Further preferably, the boron-containing compound is selected from a non-cyclic borate.
Suitable examples include tris(trimethylsilyl) borate (TMSB);

Tris(2,2,2-trifluoroethyl) borate;
Trimethyl borate; and
Triethyl borate
Tris(trimethylsilyl) borate (TMSB) is a particularly preferred example.

The general formula of such boroxine compounds is $B_3(YR)_3O_3$, in which Y and R may be the same or vary in each individual attachment case. More specifically, this may be written as:
$B_a(YR)_b(O)_c$ , in which

- Y is independently selected from C or O (i.e. they may be the same or different from each other); and
- R may be the same or vary in each individual attachment case and may be independently selected from hydrogen; any straight or branched, substituted or unsubstituted $C_1$ to $C_6$-alkyl group; a straight or branched, substituted or unsubstituted $C_1$ to $C_6$-alkenyl group; a straight or branched, substituted or unsubstituted $C_1$ to $C_6$-alkoxy group; or a substituted or unsubstituted $C_3$-$C_6$-cycloalkyl-, phenyl- or heterocycle-containing group; and
- a = b = c, wherein a, b, and c are each 3.

Suitable examples include:

Trimethoxyboroxine; and
Trimethylboroxine

The amount of the one or more boron-containing compounds used in the second component of the electrolyte composition of the present invention, may be >0 wt% weight of the solvent system, ideally >0.2 wt% weight of the solvent system, preferably >0.5 wt%, based on the total weight of the electrolyte solvent system used in the electrolyte composition.
As discussed above, the non-aqueous electrolyte composition according to the present invention may include one or more nitrile-containing compounds. The one or more nitrile-containing compounds of the present invention may be defined as described herein.
The nitrile-containing compounds used in the second solvent component of the present invention are preferably selected to enable the formation of a stable cathode-electrolyte interphase (CEI) on the cathode and/or a stable solid-electrolyte interphase (SEI) on the anode, which in turn leads to advantages such as enhanced 1st cycle coulombic efficiencies and/or cycle life enhancement.
Suitable examples include: adiponitrile, glutaronitrile, acetonitrile and 1,3-6-hexanetricarbonitrile. 1,3-6-hexanetricarbonitrile is a particularly preferred example.
The amount of the one or more nitrile-containing compounds used in the second component of the electrolyte composition of the present invention, may be >0 wt% weight of the solvent system, ideally >0.2 wt% weight of the solvent system, preferably >0.5 wt%, based on the total weight of the electrolyte solvent system used in the electrolyte composition.
As discussed above, the non-aqueous electrolyte composition according to the present invention may include one or more phosphorous-containing compounds. The one or more phosphorous-containing compounds of the present invention may be defined as described herein.
The phosphorous-containing compounds used in the second solvent component of the present invention are preferably selected to enable the formation of a stable cathode-electrolyte interphase (CEI) on the cathode and/or a stable solid-electrolyte interphase (SEI) on the anode, which in turn leads to advantages such as enhanced 1st cycle coulombic efficiencies and/or cycle life enhancement.
Preferably, the phosphorous-containing is a phosphite or phosphate containing compound.

Suitable examples include tris(trimethylsilyl) phosphite (TMSP) or tri(trimethylsilyl) phosphate.

The amount of the one or more phosphorous-containing compounds used in the second component of the electrolyte composition of the present invention, may be >0 wt% weight of the solvent system, ideally >0.2 wt% weight of the solvent system, preferably >0.5 wt%, based on the total weight of the electrolyte solvent system used in the electrolyte composition.

The non-aqueous electrolyte composition according to the present invention may further comprise one or more additional compounds which may or may not be a solvent.

Examples of such additional compounds include: a flame retardant compound (such as a polyalkly phosphate-containing compound, preferably a non-fluorinatedpolyalkyl phosphate-containing compound), a diluent (such as a hydrofluoroether-containing compound, preferably a hydrofluoroalkyl ether-containing compound), a glycol ether acetate, an ionic liquid, and any solvent which is capable of promoting the reduction of viscosity of the electrolyte by acting as an inert diluent (such as a hydrofluoroalkyl ether, preferably 1,1,2,2-Tetrafluoroethyl-2,2,3,3-tetrafluoropropyl ether (HFE or TTE)).

The electrolyte composition according to the present invention may also optionally include one or more performance additives, typically an amount of <15wt%, preferably <10 wt% and further preferably 0.1 wt% to < 5 wt%, of the total weight of the solvent system used in the electrolyte composition. Such performance additives preferably act at the electrolyte-electrode interface rather than in the bulk of the electrolyte.

Suitable performance additives may be selected from: polymerizable additives for promoting overcharge protection such as biphenyl, diphenylamine, dimethoxydiphenylsilane (DDS), 3-chloroanisole (3CA), N-phenylmaleimide, xylene (methyl-substituted benzene) and cyclohexylbenzene; additives for promoting overcharge protection based on redox-shuttle mechanism such as 2,5-di-tert-butyl-1,4 dimethoxybenzene (DDB), 4-tert-butyl-1,2-dimethoxybenzene (TDB), 1,4 bis(trimethylsilyl)-2,5-dimethoxybenzene (BTMSDB) and 1,4-bis(2-methoxyethoxy)-2,5 di-tert-butylbenzene; additives for imparting further flame retardancy attributes to the electrolyte such as dimethyl methylphosphonate (DMMP), ethoxypentafluoro-cyclotriphosphazene (N3P3F5OCH2CH3, EFPN), tri(2,2,2-trifluoroethyl) phosphite and/or tri(2,2,2-trifluoroethyl) phosphate (TFEP), methyl nonafluorobuyl ether (MFE) and silane-Al2O3 nanoparticles; additives for promoting better high temperature cycling such as succinic anhydride; and additives for rendering inert unwanted decomposition products (such as HF, water or CO2) in-situ, such as zeolites.

The present non-aqueous electrolyte compositions of the present invention are especially useful in anode-free sodium cells, also called an *in-situ* sodium plated cells. Such anode-free sodium cells may be used in an energy storage device, for example a battery, a rechargeable battery, an electrochemical device and an electrochromic device.

Thus, in one aspect, the present invention provides an anode-free sodium cell comprising a non-aqueous electrolyte composition as defined herein. More particularly, in one aspect, the present invention provides:

an anode-free sodium cell comprising:

a cathode comprising a sodium-containing active material;
an anode current collector;
a separator located between the cathode and the anode current collector; and
a non-aqueous electrolyte composition as defined herein.

The present invention also provides in another aspect the use of a non-aqueous electrolyte composition as defined herein in an anode-free sodium cell.

The present invention also provides in another aspect a method of operating an anode-free sodium cell as defined herein.

Preferably, the anode-free sodium cell has a charge cut-off voltage of 4.0V or higher.

The present invention also provides in another aspect an apparatus comprising one or more anode-free sodium cells as defined herein. For instance, a typical apparatus may include a device such as a battery pack that may have use in either a stationary or a mobile application.

As used herein an "anode-free sodium cell" refers to a cell in which the working principle of the cell involves sodium metal cation (Na$^+$) extraction/insertion from the cathode active material, and sodium metal (Na) deposition and plating / removal and stripping at the anode current collector.

During a first charge cycle of an anode-free sodium cell, a sodium metal anode is formed *in situ* on the anode current collector as sodium metal cations are reduced and deposit on the anode current collector as sodium metal.

When the anode-free sodium cell is fully discharged, the anode current collector includes only an insignificant amount of sodium metal or substantially less sodium metal than the case of fully charged cell, with the majority of the sodium metal having been oxidised to form sodium metal cations that are present in the electrolyte and/or stored in the cathode.

When the anode-free sodium cell is fully charged, the anode current collector includes a layer of sodium in electrical contact with the anode current collector, with correspondingly less amount of the sodium in the cathode. The layer of sodium in electrical contact with the anode current collector may be across the entire surface of the anode current collector, or it may be deposited in some regions of the anode current collector. However, where the sodium is deposited, it is preferable for any such sodium layer to be uniform and homogenous.

The anode-free cell disclosed herein may include a separator located between the cathode and the anode current collector. The electrolyte non-aqueous electrolyte compositions according to the present invention find particular utility when employed in an anode-free cell which comprises a polyolefin separator.

The cathode typically comprises a sodium-containing active material which is disposed on one or more surfaces of a (cathode) current collector.

The cathode current collector and the anode current collector can each be independently fabricated from any suitable conductive material. For example, the cathode current collector, the anode current collector, or both the cathode current collector and the anode current collector can be formed from a metal; such as nickel, aluminium, titanium, copper, gold, silver, platinum, aluminium alloy, stainless steel or any other metal substrate (similar to the current collectors that are generally used in sodium-ion batteries currently.

The cathode current collector, the anode current collector, or both the cathode current collector and the anode current collector can be formed from aluminium or aluminium alloy (e.g., an alloy of aluminium and one or more of Mg, Mn, Cr, Zn, Si, Fe, and Ni). Highly preferably, both the cathode current collector and the anode current collector comprise an aluminium current collector. Alternatively, copper, magnesium, carbon paper/foil/substrate and tin might also be used as current collector materials.

The cathode current collector and the anode current collector can be formed into any suitable shape compatible with the overall design of the electrochemical cell. For example, the cathode current collector and the anode current collector can each independently be formed as a foil, flat plate, mesh, net, lath, perforated metal or emboss, or a combination of these shapes (for example, meshed flat plate). If desired, irregularities may be formed on one or more surfaces of the cathode current collector and/or the anode current collector, for example, by etching the one or more surfaces of the current collector.

Highly preferably, the anode current collector is formed from aluminium or aluminium alloy, and comprises a foil or mesh shape.

Preferably, the anode current collector also includes one or more nucleation layers formed on one or more surfaces of the anode current collector, prior to an initial first charge cycle of the anode-free sodium cell. Highly preferably, such one or more nucleation layers comprise one or more carbon-containing nucleation layers.

As the anode current collector is formed with one or more nucleation layers one or more surfaces of the anode current collector, during a first charge cycle of the anode-free sodium cell, metal cations are reduced and deposit on the one or more nucleation layers as sodium metal.

As used herein the term "nucleation layer" means any coating or layer that is disposed on one or more surfaces of a "pristine" anode current collector prior to an initial first charge cycle of the anode-free sodium cell. The use of a nucleation layer enables a more uniform and homogeneous sodium metal deposition, compared to a current collector without such a nucleation layer.

A particularly preferred nucleation layer is any coating or layer that will result in a decrease of the "nucleation overpotential" of sodium metal plating.

As sodium metal is deposited on an anode current collector via constant-current (galvanostatic) cycling, the potential of sodium plating will first decrease (to a more negative value below 0 V vs Na/Na+), before rising to a higher potential value (but still below 0 V vs Na/Na+) during steady-state conditions for the same galvanostatic current values.

Thus, the "nucleation overpotential" of sodium deposition is defined herein as the difference between the most negative potential and the steady-state plating potential. Therefore, a person skilled in the art could readily measure the nucleation overpotential of sodium deposition using an anode current collector that includes one or more nucleation layers formed on a surface of the anode current collector and compare it to the nucleation overpotential of sodium deposition using a "pristine" anode current collector to determine a preferred nucleation layer described herein. This could be performed in a half-cell or three-electrode cell constructed using the common general knowledge.

As discussed above, advantageously, the one or more nucleation layers enable the deposition of sodium metal atoms and clusters of atoms at and across the surface of the anode current collector, and thus facilitates more uniform plating whilst also minimising parasitic reactions.

The one or more nucleation layers may be formed across the majority (or the entire 100%) one or more surface of the anode current collector, or may be formed as a partial coating by design (e.g. one or more nucleation layers formed on some regions of such surfaces - these regions would be homogenous and uniform within the area).

The one or more nucleation layers preferably comprises one or more layers of negative active material (e.g., a thin layer such as from 0.1μm to 1000 μm) which may or may not be mixed with any type of conductive additive such as carbon black (to enhance the electronic conductivity of the negative active material) and/or a binder material which can be compatible with a water or organic solvent).

Highly preferably, the one or more nucleation layers comprise one or more carbon-containing nucleation layers, and highly preferably one or more carbon-containing nucleation layers having a thickness from about 10 Angstrom to about 1000 μm.

Suitable one or more carbon-containing nucleation layers may include: carbon black, carbon nanotubes, carbon nanofibers, graphite/graphene, hard carbon, glassy carbon, soft carbon, activated carbon (e.g. in fibrous form), or a combination thereof. In some cases, the carbon-containing nucleation layer can comprise amorphous carbon (e.g., a carbon black, such as TIMCAL® Super C65). Techniques such as the doctor blade coating method, slot die coating method, ultrasonic spray deposition, screen printing method, physical vapour deposition (PVD) and chemical vapour deposition (CVD) may also be used to prepare such carbon-containing nucleation layers.

Such one or more carbon-containing nucleation layers may also further comprise one or more binders and/or conductivity additives.

Examples of one or more binders include a polymer such as PAA, PVDF, PEO, PTFE, SBR (styrene butadiene rubber), acrylic emulsion polymers, cellulosic polymers (e.g. CMC), copolymers thereof, and blends thereof.

In some embodiments, the nucleation layer (preferably carbon-containing nucleation layer) can be present at an areal loading of less than 2 mg/cm$^2$ (based on the weight of the active material (e.g. C65), and excluding for instance the optional binders and/or additives etc.) on the surface of the anode current collector (e.g., less than 1.75 mg/cm$^2$, less than 1.5 mg/cm$^2$, less than 1.25 mg/cm$^2$, less than 1 mg/cm$^2$, less than 900 μg/cm$^2$, less than 800 μg/cm$^2$, less than 700 μg/cm$^2$, less than 600 μg/cm$^2$, less than 500 μg/cm$^2$, less than 400 μg/cm$^2$, less than 300 μg/cm$^2$, less than 200 μg/cm$^2$, less than 100 μg/cm$^2$, or less than 50 μg/cm$^2$).

In some embodiments, the nucleation layer (preferably carbon-containing nucleation layer) can be present at an areal loading of at least 20 μg/cm$^2$ on the surface of the first metal current collector (e.g., at least 50 μg/cm$^2$, at least 100 μg/cm$^2$, at least 200 μg/cm$^2$, at least 300 μg/cm$^2$, at least 400 μg/cm$^2$, at least 500 μg/cm$^2$, at least 600 μg/cm$^2$, at least 700 μg/cm$^2$, at least 800 μg/cm$^2$, at least 900 μg/cm$^2$, at least 1 mg/cm$^2$, at least 1.25 mg/cm$^2$, at least 1.5 mg/cm$^2$, or at least 1.75 mg/cm$^2$).

In some embodiments, the nucleation layer (preferably carbon-containing nucleation layer) can be present on the surface of the first metal current collector at an areal loading ranging from any of the minimum values described above to any of the maximum values described above. For example, the nucleation layer can be present on the surface of the first metal current collector at an areal loading of from 20 μg/cm$^2$ to 2 mg/cm$^2$, from 50 μg/cm$^2$ to 2 mg/cm$^2$, from 100 μg/cm$^2$ to 2 mg/cm$^2$, from 200 μg/cm$^2$ to 2 mg/cm$^2$, from 400 μg/cm$^2$ to 2 mg/cm$^2$, from 20 μg/cm$^2$ to 1 mg/cm$^2$, from 50 μg/cm$^2$ to 1 mg/cm$^2$, from 100 μg/cm$^2$ to 1 mg/cm$^2$, from 200 μg/cm$^2$ to 1 mg/cm$^2$, or from 400 μg/cm$^2$ to 1 mg/cm$^2$.

Nucleation is a surface process. Accordingly, the nucleation layer (preferably carbon-containing nucleation layer) can in principle be a single atomic layer in thickness so as to provide for an interface (surface) for sodium nucleation. In some embodiments described herein, the nucleation layer (preferably carbon-containing nucleation layer) can have a thickness of 1000 Angstroms or less (e.g., 500 Angstroms or less, 100 Angstroms or less, 50 Angstroms or less, 30 Angstroms or less, 25 Angstroms or less, 20 Angstroms or less, or 10 Angstroms or less.

Alternatively, the anode current collector also includes two or more nucleation layers formed on one or more surfaces of the anode current collector, prior to an initial first charge cycle of the anode-free sodium cell. In one embodiment, such two or more nucleation layers are preferably two or more carbon-containing nucleation layers.

Alternatively, the anode current collector disclosed herein does not include one or more nucleation layers on one or more surfaces of the anode current collector prior to an initial first charge cycle of the anode-free sodium cell. Therefore, the anode current collector is "pristine" prior to an initial first charge cycle of the anode-free sodium cell.

As used herein, the phrase "pristine" means that it is in its "as made" state prior to an initial first charge cycle of the anode-free sodium cell. In other words, the anode current collector is essentially the pure material from which it is formed from, barring impurities (e.g. surface oxide layers etc). As such the anode current collector is not coated with one more nucleation layers (as discussed above), conventional active materials, binders, or the like.

Following charge and discharge cycles, the anode current collector in a fully Na-stripped state may be identical to the "pristine" state, or it may incorporate one or more layers substantially comprising sodium-containing material. It may also comprise inorganic-rich and/or organicrich materials, from for example, the electrolyte composition, and decomposition products thereof.

Based on the disclosures herein, it is believed that an anode-free sodium cell according to the present invention may be formed using any type of sodium-containing active material serving as the cathode.

Examples of these include sodium transition metal oxides, polyanionic compounds (including fluorinated polyanionic compounds), Prussian blue compounds (and its analogous such as Prussian White or Berlin Green), materials storing sodium via a conversion reaction, sodium transition metal fluorides, oxyfluorides, phosphates, sulfates, and silicates (and their fluorinated versions). Preferred examples are sodium transition metal oxides.

Preferred sodium transition metal oxides are of the general formula:

$$A_{1\pm\delta} M^1_V M^2_W M^3_X M^4_Y M^5_Z O_{2-c}$$

wherein

A is one or more alkali metals selected from sodium, potassium and lithium;
$M^1$ comprises one or more redox active metals in oxidation state +2, preferably selected from the group consisting of nickel, copper, cobalt and manganese;
$M^2$ comprises a metal in oxidation state greater than 0 to less than or equal to +4;
$M^3$ comprises a metal in oxidation state +2;
$M^4$ comprises a metal in oxidation state greater than 0 to less than or equal to +4;
$M^5$ comprises a metal in oxidation state +3;

wherein

$$0 \leq \delta \leq 1;$$

V is > 0;
W is $\geq$ 0;
X is $\geq$ 0;
Y is $\geq$ 0;
at least one of W and Y is > 0
Z is $\geq$ 0;
C is in the range $0 \leq c < 2$
wherein V, W, X, Y, Z and C are chosen to maintain electrochemical neutrality.

Ideally, metal $M^2$ comprises one or more transition metals, and is preferably selected from manganese, titanium and zirconium; $M^3$ is preferably one or more selected from magnesium, calcium, copper, tin, zinc and cobalt; $M^4$ comprises one or more transition metals, preferably selected from manganese, titanium and zirconium; and $M^5$ is preferably one or more selected from aluminium, iron, cobalt, tin, molybdenum, chromium, vanadium, scandium and yttrium.

A particularly preferred sodium-containing active material will be a nickelate-based material.

A sodium-containing active material with any crystalline structure may be used, however, preferably the structure will be O3 or P2 or a derivative thereof, but, specifically, it is also possible that the sodium-containing active material will comprise a mixture of phases, i.e. it will have a non-uniform structure composed of several different crystalline forms. For example, the sodium-containing active material will comprise a compound with the general formula detailed above in a mixture of O3 and P2 phases. The ratio of O3:P2 phases is preferably 1 to 99: 99 to1.

The cathode disclosed herein may also include a binder. The binder improves binding properties of the sodium containing active material particles with one another and the current collector. The binder may be a non-aqueous binder, an aqueous binder, or a combination thereof.

Non-aqueous binders that may be mentioned herein include, but are not limited to, polyvinylchloride, carboxylated polyvinylchloride, polyvinylfluoride, an ethylene oxidecontaining polymer, polyvinylpyrrolidone, polyurethane, polytetrafluoroethylene, polyvinylidene fluoride, polyethylene, polypropylene, polyamideimide, and polyimide.

Aqueous binders that may be mentioned herein include, but are not limited to, a rubber- based binder or a polymer resin binder. Rubber-based binders may be selected from a styrene-butadiene rubber, an acrylated styrene-butadiene rubber (SBR), an acrylonitrile- butadiene rubber, an acrylic rubber, a butyl rubber, a fluorine rubber, and a combination thereof.

Polymer resin binders may be selected from ethylenepropylene copolymer, epichlorohydrin, polyphosphazene, polyacrylonitrile, polystyrene, ethylenepropylenediene copolymer, polyvinylpyridine, chlorosulfonated polyethylene, latex, a polyester resin, an acrylic resin, a phenolic resin, an epoxy resin, polyvinyl alcohol and a combination thereof.

A cellulose-based compound may be used as the binder (or in combination with other materials). Examples of suitable cellulose-based materials includes, but is not limited to, one or more of carboxyl methyl cellulose, hydroxypropylmethyl cellulose, methyl cellulose, or alkali metal salts thereof. The alkali metal may be Na, K, or Li. Such a cellulose-based compound may be included in an amount of about 0.1 parts by weight to about 20 parts by weight based on 100 parts by weight of the active material. A particular cellulose-based binder that may be mentioned herein is the sodium salt of carboxyl methyl cellulose.

The anode-free cell disclosed herein may include a separator located between the cathode and the anode current collector. The electrolyte compositions according to the present invention find particular utility when employed in an anode-free cell which comprises a polyolefin separator.

In an alternative aspect, the present invention also provides a sodium-cell comprising a non-aqueous electrolyte composition as defined herein.

More particularly, the present invention provides a sodium-ion cell comprising a negative electrode, a positive electrode, and a non-aqueous electrolyte composition as defined herein. Such sodium-ion cells may be used in an energy storage device, for example a battery, a rechargeable battery, an electrochemical device and an electrochromic device.

Ideally, non-aqueous electrolyte composition as defined herein are used in sodium-ion cells which employ a carbon-containing material as the active negative (anode) electrode material. It is most preferable that the non-aqueous electrolyte compositions of the present invention are used with a non-graphitisable carbon-containing anode, preferably a hard carbon anode.

**BRIEF DESCRIPTION OF THE DRAWINGS**

The present invention will now be described with reference to the following figures in which:

FIGURE 1a shows a plot of cathode discharge capacity (mAh/g) vs cycle number to illustrate the cycling stability within a 3.70 to 1.0 V window for cells that use a control electrolyte composition (sample TEL 66i).

FIGURE 1b shows a plot of % coulombic efficiency vs cycle number to illustrate the cycling performance for cells that use a control electrolyte composition (sample TEL 66i).

FIGURE 2a shows a plot of cathode discharge capacity (mAh/g) vs cycle number to illustrate the cycling stability for cells that use electrolyte compositions of the present invention (samples TEL 66j, TEL 66k, TEL 66L, TEL 66m, and TEL 66n), compared against the cycling stability of a cell which uses a control electrolyte composition (sample TEL 66i).

FIGURE 2b shows a plot of % coulombic efficiency vs cycle number to illustrate the cycling performance for cells that use electrolyte compositions of the present invention (samples TEL 66j, TEL 66k, TEL 66L, TEL 66m, and TEL 66n), compared against the cycling performance of a cell which uses a control electrolyte composition (sample TEL 66i).

Figure 2c shows a plot of full cell voltage (V) vs cathode discharge capacity (mAh/g) (i.e voltage-capacity cycling curve) for the 5th cycle for cells that use electrolyte compositions of the present invention (sample TEL 66n), compared against cells which use a control electrolyte composition (sample TEL 66i).

FIGURE 3a shows a plot of cathode discharge capacity (mAh/g) vs cycle number to illustrate the cycling stability for cells that use sample TEL 66R, compared against the cycling stability of a cell which uses a sample TEL 66o.

FIGURE 3b shows a plot of % coulombic efficiency vs cycle number to illustrate the cycling performance for cells that use sample TEL 66R, compared against the cycling performance of a cell which uses a sample TEL 66o.

FIGURE 4a shows a plot of cathode discharge capacity (mAh/g) vs cycle number to illustrate the cycling stability for cells that use electrolyte compositions of the present invention (samples TEL 66P, TEL 66Q, TEL 66P, TEL 66h, TEL 66Q, TEL 66S, and TEL 66T).

FIGURE 4b shows a plot of % coulombic efficiency vs cycle number to illustrate the cycling performance for cells that use electrolyte compositions of the present invention (samples TEL 66P, TEL 66Q, TEL 66P, TEL 66h, TEL 66Q, TEL 66S, and TEL 66T).

FIGURE 5a show a plot of cathode discharge capacity (mAh/g) vs cycle number to illustrate the cycling stability for cells that use an electrolyte composition of the present invention (samples TEL 66d).

FIGURE 5b show a plot of cathode discharge capacity (mAh/g) vs cycle number to illustrate the cycling performance for cells that use an electrolyte composition of the present invention (samples TEL 66d).

FIGURE 6a shows a plot of cathode discharge capacity (mAh/g) vs cycle number to illustrate the cycling stability for cells that use electrolyte compositions of the present invention (samples TEL 85b, TEL 66U, TEL 85g, TEL 85h, TEL 85i, and TEL 66V), compared against the cycling stability of a cell which uses a control electrolyte composition (sample TEL 66i).

FIGURE 6b shows a plot of % coulombic efficiency vs cycle number to illustrate the cycling performance for cells that use electrolyte compositions of the present invention (samples TEL 85b, TEL 66U, TEL 85g, TEL 85h, TEL 85i, and TEL 66V), compared against the cycling performance of a cell which uses a control electrolyte composition (sample TEL 66i).

FIGURE 7a shows a plot of cathode discharge capacity (mAh/g) vs cycle number to illustrate the cycling stability for cells (INFC 73, INFC 74, INFC 75, INFC 82, INFC 83, INFC 76, INFC 96, and INFC 97) that each use an electrolyte composition of the present invention (sample TEL 66P) but are each constructed with a different type of anode current collector.

FIGURE 7b shows a plot of % coulombic efficiency vs cycle number to illustrate the cycling performance for cells (INFC 73, INFC 74, INFC 75, INFC 82, INFC 83, INFC 76, INFC 96, and INFC 97) that each use an electrolyte composition of the present invention (sample TEL 66P) but are each constructed with a different type of anode current collector.

FIGURE 8a shows a plot of cathode discharge capacity (mAh/g) vs cycle number to illustrate the cycling stability for cells that use electrolyte compositions of the present invention (samples TEL 66W, TEL 66X, TEL 66Y, TEL 66Z, TEL 85, and TEL 85a).

FIGURE 8b shows a plot of % coulombic efficiency vs cycle number to illustrate the cycling performance for cells that use electrolyte compositions of the present invention (samples TEL 66W, TEL 66X, TEL 66Y, TEL 66Z, TEL 85, and TEL 85a).

FIGURE 9a show a plot of cathode discharge capacity (mAh/g) vs cycle number to illustrate the cycling stability for cells that use electrolyte compositions of the present invention (samples TEL 66d, TEL 85e, TEL 85f, and TEL 66P).

FIGURE 9b shows a plot of % coulombic efficiency vs cycle number to illustrate the cycling performance for cells that use electrolyte compositions of the present invention (samples TEL 66d, TEL 85e, TEL 85f, and TEL 66P).

## EXAMPLES

The electrolyte compositions of the present invention are particularly effective as electrolyte compositions for use in an anode-free sodium cell. The anode-free sodium cells can be prepared as described below.

The cathode is formed from a first current collector having a positive active material disposed on a surface of the first current collector.

The positive active material is a sodium-containing active material which may or may not be mixed with any type of conductive additive such as carbon black (to enhance the electronic conductivity of the positive active material) and/or a binder material (water or organic solvent). The positive active material is then spread on an aluminium (or other metal) current collector using a traditional electrode processing technique such as that described in WO 2020/240209 A1.

The anode is formed from further (second) current collector which is simply a thin metal substrate (e.g., a sheet of foil) made from copper, aluminium, stainless steel, or any other metal substrate (similar to the current collectors that are generally used in sodium-ion batteries currently).

As shown in the examples, in one embodiment, the anode current collector does not include any nucleation layers on one or more surfaces of the anode current collector prior to an initial first charge cycle of the anode-free sodium cell. Therefore, the anode current collector is pristine prior to an initial first charge cycle of the anode-free sodium cell.

As also shown in the examples, in an alternative embodiment, the anode current collector includes one or more nucleation layers that are formed on one or more surfaces of the anode current collector prior to an initial first charge cycle of the anode-free sodium cell.

### Positive (cathode electrode)

Anode-free sodium cells were fabricated using a mixed phase O3/P2 oxide positive active material; O3/P2-$A_{1\pm\delta}$ $M^1{}_V M^2{}_W M^3{}_X M^4{}_Y M^5{}_Z O_{2-c}$ which was prepared as described in International Application No. PCT/GB2019/051022 (published as WO 2019/197812 A1) and US Patent No. 10,550,007.

The particle size d50 of the positive active material was 10 $\pm$ 2 $\mu$m measured using laser diffraction using a Malvern Mastersizer® 2000 and ethanol as a dispersant. The tap density of the positive active material was also >0.96 g/ml.

The positive (cathode) electrode was then prepared by solvent-casting a slurry of the active material, conductive carbon, binder and solvent. The conductive carbon used was C65 (Imerys). PVdF co-polymer (e.g. W#7500 from Kureha Chemicals) was used as the binder, and N-methyl Pyrrolidone (NMP) was employed as the solvent. The slurry was then cast onto carbon-coated aluminium foil and dried at about 80°C. The electrode film contained the following components, expressed in percent by weight: 89% active material, 5% C65 carbon, and 6% V 7500 binder. Alternatively, the electrode film contained the following components, expressed in percent by weight: 92% active material, 4% C65 carbon, and 4% W#7500 binder as discussed in "cell assembly" below.

**Preparation of electrolytes**

The electrolyte compositions under investigation were prepared using the following general procedure: appropriate amounts of a first component (e.g., solvents for the desired solvent system) and appropriate amounts of a second component (e.g., additives selected from sulfur-containing compound/ boron-containing compound/ nitrile-containing compound/ phophorouscontaining compound/ surfactant) were weighed out in an argon-filled glove box and added to a brown or clear glass or metal bottle.

To dry the formed solvent system thoroughly, 4 Å molecular sieves (Sigma-Aldrich®) were added and allowed to dry the solvent mixture for at least 24 h. Afterwards, this solvent mixture was transferred to another brown or clear glass bottle which contained a magnetic stir bar while still in the glove box. The correct amount of one or more sodium-containing salts was then weighed out in the argon-filled glovebox and slowly added to the solvent mixture under continued stirring. The electrolyte mixture was stirred until the sodium-containing salt(s) was visually determined to have dissolved on a magnetic stirrer plate (stirring time would typically be at least 10 minutes, such as 2 h or 48 h). The electrolyte composition was then removed from the stirrer plate and stored and used in the argon-filled glovebox.

The precise composition of each of the electrolyte compositions investigated, is detailed in Table 1 below:

**TABLE 1**

| Electrolyte Composition Sample Ref. | Composition |
|---|---|
| TEL 66d | 1.5m NaBF$_4$ Tetraglyme:diglyme at 1:1 wt/wt ratio with 2 wt% PCS, 1 wt% P123, 1 wt% TMSB |
| TEL 66h | 1.5m NaBF$_4$ Tetraglyme:diglyme at 1:1 wt/wt ratio with 10 wt% FEC, 2 wt% PCS, 1 wt% P123, 1 wt% TMSB |
| TEL 66i* | 1.5m NaBF$_4$ in Tetraglyme:diglyme at 1:1 wt/wt |
| TEL 66j | 1.5m NaBF$_4$ Tetraglyme:diglyme at 1:1 wt/wt ratio with 2 wt% PCS |
| TEL 66k | 1.5m NaBF$_4$ Tetraglyme:diglyme at 1:1 wt/wt ratio with 1 wt% P123 |
| TEL 66L | 1.5m NaBF$_4$ Tetraglyme:diglyme at 1:1 wt/wt ratio with 1 wt% TMSB |
| TEL 66n | 1.5m NaBF$_4$ Tetraglyme:diglyme at 1:1 wt/wt ratio with 2 wt% TMSB |
| TEL 66m* | 1.5m NaBF$_4$ Tetraglyme:diglyme at 1:1 wt/wt ratio with 2 wt% FEC |
| TEL 66o | 1.5m NaBF$_4$ Tetraglyme:diglyme at 1:1 wt/wt ratio with 1 wt% VC, 1 wt% TMSB |
| TEL 66P | 1.5m NaBF$_4$ Tetraglyme:diglyme at 1:1 wt/wt ratio with 0.5 wt% PCS, 1 wt% P123, 2 wt% TMSB |
| TEL 66Q | 1.5m NaBF$_4$ Tetraglyme:diglyme at 1:1 wt/wt ratio with 0.2 wt% FEC, 1 wt% P123, 2 wt% TMSB |
| TEL 66R | 1.5m NaBF$_4$ Tetraglyme:diglyme at 1:1 wt/wt ratio with 2 wt% TMSB, 1 wt% P123 |
| TEL 66S | 1.5m NaBF4 Tetraglyme with 0.5 wt% PCS, 1 wt% P123, 2 wt% TMSB |
| TEL 66T | 1.5m NaBF4 Tetraglyme:diglyme at 1:1 wt/wt ratio with 0.5 wt% PCS, 1 wt% TOC, 2 wt% TMSB |
| TEL 66U | 1.5m NaBF4 Tetraglyme:diglyme at 1:1 wt/wt ratio with 0.5 wt% PCS, 1 wt% P123, 2 wt% TMSP |
| TEL 66V | 1.5m NaBF4 Tetraglyme:diglyme at 1:1 wt/wt ratio with 0.5 wt% PCS, 1 wt% P123, 2 wt% TMSB, 2 wt% HTC |
| TEL 66W | 1.5m NaBF4 Tetraglyme:diglyme at 1:1 wt/wt ratio with 7 wt% PCS, 1 wt% P123, 2 wt% TMSB |
| *TEL 66X | 1.5m NaBF4 Tetraglyme:diglyme at 1:1 wt/wt ratio with 15 wt% PCS, 1 wt% P123, 2 wt% TMSB |
| TEL 66Y | 1.5m NaBF4 Tetraglyme:diglyme at 1:1 wt/wt ratio with 0.5 wt% PCS, 1 wt% P123, 8.5 wt% TMSB |

(continued)

| Electrolyte Composition Sample Ref. | Composition |
|---|---|
| TEL 66Z | 1.5m NaBF4 Tetraglyme:diglyme at 1:1 wt/wt ratio with 0.5 wt% PCS, 1 wt% P123, 15 wt% TMSB |
| TEL 85 | 1.5m NaBF4 Tetraglyme:diglyme at 1:1 wt/wt ratio with 0.5 wt% PCS, 7.5 wt% P123, 2 wt% TMSB |
| TEL 85a | 1.5m NaBF4 Tetraglyme:diglyme at 1:1 wt/wt ratio with 0.5 wt% PCS, 15 wt% P123, 2 wt% TMSB |
| TEL 85b | 1.5m NaBF4 Tetraglyme:diglyme at 1:1 wt/wt ratio with 0.5 wt% PCS, 1 wt% P123, 2 wt% Trimethoxyboroxine |
| TEL 85e | 1.5m NaBF4 Tetraglyme:diglyme at 1:1 wt/wt ratio with 2 wt% PCS, 1 wt% P123, 2 wt% TMSB |
| TEL 85f | 1.5m NaBF4 Tetraglyme:diglyme at 1:1 wt/wt ratio with 1 wt% PCS, 1 wt% P123, 2 wt% TMSB |
| TEL 85g | 1.5m NaBF4 Tetraglyme:diglyme at 1:1 wt/wt ratio with 2 wt% PST, 1 wt% P123 and 1 wt% TMSB |
| TEL 85h | 1.5m NaBF4 Tetraglyme:diglyme at 1:1 wt/wt ratio with 2 wt% SUL, 1 wt% P123 and 1 wt% TMSB |
| TEL 85i | 1.5m NaBF4 Tetraglyme:diglyme at 1:1 wt/wt ratio with 2 wt% HTC, 1 wt% P123 and 1 wt% TMSB |
| * indicates an electrolyte composition that is not according to the present invention. | |

Abbreviations used:

$VC$ = vinylene carbonate, **FEC** = Fluoroethylene carbonate, **PCS** = 1,3-propanediolcyclic sulfate, **P123** = Poloxamer (Pluronic) P123, **TMSB** = Tris(trimethylsilyl) borate, **TOC** = Trioctyl Phosphate, **TMSP** = Tris(trimethylsilyl) phosphite; **HTC** = 1,3-6-Hexanetricarbonitrile; **TMB** = Trimethoxyboroxine; **PST** = 1-Propene 1,3 Sultone; **SUL** = Sulfolane

**Tetraglyme** = Tetraethylene glycol dimethyl ether, **Diglyme** = diethylene glycol dimethyl ether, $NaBF_4$ = sodium tetrafluoroborate.

Please note that in the above Table 1, the wt% of the various solvents and/or additives are mentioned with respect to the total solvent weight (they do not account for the weights(s) of the one or more sodium-containing salts). Furthermore, the salt concentrations in Table 1 are described in molality, m (moles of solute per kg of solvent, mol/kg).

**Cell assembly**

The anode-free sodium-cells described throughout the examples were fabricated as pouch cells. The cathode contained a mixed-phase O3/P2 layered oxide sodium-ion active material which was mixed with C65 carbon black conductive additive and polyvinylidene fluoride (PVDF) binder (with weight ratios such as 89:05:06 or 92:04:04) on carbon-coated Al foils.

The anode was an aluminium foil with/without a thin surface carbon coating. Therefore, in those embodiments in which anode was fabricated without any coating of active material disposed on the current collector, the anode was simply an aluminium foil.

Alternatively, in those embodiments in which the anode was fabricated with a nucleation layer disposed on a surface of the current collector, the anode was either: a 'bare En' Safe 92' substrate, which was an aluminium foil coated with a thin (about 1 $\mu$m) carbon primer layer, and procured from ARMOR (their En' Safe® series of products); or an aluminium foil current collector coated with a carbon black (C65):PVDF (=90:10 wt/wt) layer at the specified GSMs, using the doctor blade method.

After coating the cathode and anode, they were stamped at the desired dimensions.

The separator used was a typical polyolefinic separator used commonly for any type of rechargeable lithium-ion or sodium-ion battery, such as Celgard® 2500. The cathode/separator/anode assembly was placed within a pouch, inside the glove box, and filled with the stated liquid electrolytes in quantities typical of such types of polyolefinic separatorcontaining lithium-ion or sodium-ion cells. These pouch cells were then sealed in the glove box and brought out for cell testing. Throughout this disclosure, two different nominal capacities of pouch cells are used (varying according to the dimensions of the electrode stack): most results by default are on 6 mAh nominal capacity pouch cells and where noted, some results are also on larger-scale 0.1 Ah anode-free pouch cells.

**Cell testing**

The cells are tested as following using Constant Current (Galvanostatic) Cycling techniques. The cells are cycled at a given current density between pre-set voltage limits as defined in the examples, where the upper cut-off voltage might or might not contain a constant voltage step. A commercial battery cycler from MTI Inc. (Richmond, CA, USA) or Maccor (Tulsa, OK, USA) was used. Cells were cycled at 30 °C.

**TABLE 2 - Summary of Cycling Experiments for Anode-Free Sodium Cells**

| Exp No. | Experiment type | Cell No. | Nucleation layer on anode current collector? | Electrolyte composition Ref. | Electrolyte composition | Cycling conditions |
|---|---|---|---|---|---|---|
| 1A* | No additive, lower voltage | INFC 53 | Yes (En' Safe 92) | TEL 66i | 1.5m NaBF4 in Tetraglyme:diglyme at 1:1 wt/wt | 3.7-1.0V at rate of ±C/5 |
| 1B* | No additive, lower voltage | INFC 58 | Yes (C65 Layer on Al) | TEL 66i | 1.5m NaBF4 in Tetraglyme:diglyme at 1:1 wt/wt | 3.7-1.0V at rate of ±C/5 |
| 1C* | No additive, lower voltage | INFC 59 | No | TEL 66i | 1.5m NaBF4 in Tetraglyme:diglyme at 1:1 wt/wt | 3.7-1.0V at rate of ±C/5 |
| 2A* | No additive, higher voltage | INFC 57 | Yes (En' Safe 92) | TEL 66i | 1.5m NaBF4 in Tetraglyme:diglyme at 1:1 wt/wt | 4.0-1.0V at rate of +C/10, - 1C, and then ±C/5, 1C |
| 2B | One additive, low voltage | INFC 65 | Yes (En' Safe 92) | TEL 66L | 1.5m NaBF4 Tetraglyme:diglyme at 1:1 wt/wt ratio with 1 wt% TMSB | 3.7-1.0V at rate of +C/5, -1C |
| 2C | One additive, low voltage | INFC 69 | Yes (En' Safe 92) | TEL 66n | 1.5m NaBF4 Tetraglyme:diglyme at 1:1 wt/wt ratio with 2 wt% TMSB | 3.7-1.0V at rate of +C/5, -1C |
| 2D | One additive, high voltage | INFC 62 | Yes (En' Safe 92) | TEL 66L | 1.5m NaBF4 Tetraglyme:diglyme at 1:1 wt/wt ratio with 1 wt% TMSB | 4.0-1.0V at rate of +C/10, - 1C, and then +C/5, -1C |
| 2E | One additive, high voltage | INFC 64 | Yes (En' Safe 92) | TEL 66L | 1.5m NaBF4 Tetraglyme:diglyme at 1:1 wt/wt ratio with 1 wt% TMSB | 4.0-1.0V at rate of +C/5, -1C |
| 2F | One additive, high voltage | INFC 67 | Yes (En' Safe 92) | TEL 66n | 1.5m NaBF4 Tetraglyme:diglyme at 1:1 wt/wt ratio with 2 wt% TMSB | 4.0-1.0V at rate of +C/5, -1C |

(continued)

| Exp No. | Experiment type | Cell No. | Nucleation layer on anode current collector? | Electrolyte composition Ref. | Electrolyte composition | Cycling conditions |
|---|---|---|---|---|---|---|
| 2G | One additive, high voltage | INFC 61 | Yes (En' Safe 92) | TEL 66k | 1.5m NaBF4 Tetraglyme:diglyme at 1:1 wt/wt ratio with 1 wt% P123 | 4.0-1.0V at rate of +C/10, - 1C, and then +C/5, -1C |
| 2H | One additive, high voltage | INFC 60 | Yes (En' Safe 92) | TEL 66j | 1.5m NaBF4 Tetraglyme:diglyme at 1:1 wt/wt ratio with 2 wt% PCS | 4.0-1.0V at rate of +C/10, - 1C, and then +C/5, -1C |
| 2i* | One additive, high voltage | INFC 63 | Yes (En' Safe 92) | TEL 66m | 1.5m NaBF4 Tetraglyme:diglyme at 1:1 wt/wt ratio with 2 wt% FEC | 4.0-1.0V at rate of +C/10, - 1C, and then +C/5, -1C |
| 3A | Two additives, high voltage | INFC 72 | Yes (En' Safe 92) | TEL 66R | 1.5m NaBF4 Tetraglyme:diglyme at 1:1 wt/wt ratio with 2 wt% TMSB, 1 wt% P123 | 4.0-1.0V at rate of +C/5, -1C |
| 3B | Two additives, high voltage | INFC 92 | Yes (En' Safe 92) | TEL 66R | 1.5m NaBF4 Tetraglyme:diglyme at 1:1 wt/wt ratio with 2 wt% TMSB, 1 wt% P123 | 4.0-1.0V at rate of +C/5, -1C |
| 3C | Two additives, low voltage | FPC220215 | Yes (En' Safe 92) | TEL 66R | 1.5m NaBF4 Tetraglyme:diglyme at 1:1 wt/wt ratio with 2 wt% TMSB, 1 wt% P123 | 3.7-1.0V at rate of +C/10, - 1C, and then +C/5, -1C |
| 3D | Two additives, low voltage | FPC220218 | Yes (En' Safe 92) | TEL 66R | 1.5m NaBF4 Tetraglyme:diglyme at 1:1 wt/wt ratio with 2 wt% TMSB, 1 wt% P123 | 4.0-1.0V at rate of +C/10, - 1C, and then +C/5, -1C |
| 3E | Two additives (one not according to the invention) | INFC 68 | Yes (En' Safe 92) | TEL 66o | 1.5m NaBF4 Tetraglyme:diglyme at 1:1 wt/wt ratio with 1 wt% VC, 1 wt% TMSB | 4.0-1.0V at rate of +C/5, -1C |
| 4A | Three additives, lower voltage | FPC220213 | Yes (En' Safe 92) | TEL 66P | 1.5m NaBF4 Tetraglyme:diglyme at 1:1 wt/wt ratio with 0.5 wt% PCS, 1 wt% P123, 2 wt% TMSB | 3.7-1.0V at rate of +C/10, - 1C, and then +C/5, -1C |
| 4B | Three additives, lower voltage (one not according to the invention) | FPC220214 | Yes (En' Safe 92) | TEL 66Q | 1.5m NaBF4 Tetraglyme:diglyme at 1:1 wt/wt ratio with 0.2 wt% FEC, 1 wt% P123, 2 wt% TMSB | 3.7-1.0V at rate of +C/10, - 1C, and then +C/5, -1C |

(continued)

| Exp No. | Experiment type | Cell No. | Nucleation layer on anode current collector? | Electrolyte composition Ref. | Electrolyte composition | Cycling conditions |
|---|---|---|---|---|---|---|
| 4C | Three additives, higher voltage | INFC 70 | Yes (En' Safe 92) | TEL 66P | 1.5m NaBF4 Tetraglyme:diglyme at 1:1 wt/wt ratio with 0.5 wt% PCS, 1 wt% P123, 2 wt% TMSB | 4.0-1.0V at rate of +C/5, -1C |
| 4D | Three additives (one not according to the invention) | INFC 45 | Yes (En' Safe 92) | TEL 66h | 1.5m NaBF4 Tetraglyme:diglyme at 1:1 wt/wt ratio with 10 wt% FEC, 2 wt% PCS, 1 wt% P123, 1 wt% TMSB | 4.0-1.0V at rate of ±C/10 |
| 4E | Three additives, higher voltage | INFC 71 | Yes (En' Safe 92) | TEL 66Q | 1.5m NaBF4 Tetraglyme:diglyme at 1:1 wt/wt ratio with 0.2 wt% FEC, 1 wt% P123, 2 wt% TMSB | 4.0-1.0V at rate of +C/5, -1C |
| 4F | Three additives, higher voltage | INFC 78 | Yes (En' Safe 92) | TEL 66S | 1.5m NaBF4 Tetraglyme with 0.5 wt% PCS, 1 wt% P123, 2 wt% TMSB | 4.0-1.0V at rate of +C/5, -1C |
| 4G | Three additives, higher voltage | INFC 79 | Yes (En' Safe 92) | TEL 66T | 1.5m NaBF4 Tetraglyme:diglyme at 1:1 wt/wt ratio with 0.5 wt% PCS, 1 wt% TOC, 2 wt% TMSB | 4.0-1.0V at rate of +C/5, -1C |
| 4H | Three additives, lower voltage | FPC220216 | Yes (En' Safe 92) | TEL 66P | 1.5m NaBF4 Tetraglyme:diglyme at 1:1 wt/wt ratio with 0.5 wt% PCS, 1 wt% P123, 2 wt% TMSB | 4.0-1.0V at rate of +C/10, - 1C, and then +C/5, -1C |
| 4I | Three additives, lower voltage (one not according to the invention) | FPC220217 | Yes (En' Safe 92) | TEL 66Q | 1.5m NaBF4 Tetraglyme:diglyme at 1:1 wt/wt ratio with 0.2 wt% FEC, 1 wt% P123, 2 wt% TMSB | 4.0-1.0V at rate of +C/10, - 1C, and then +C/5, -1C |
| 5A | Three additives, long term cycling | INFC16 | Yes (En' Safe 92) | TEL 66d | 1.5m NaBF4 Tetraglyme:diglyme at 1:1 wt/wt ratio with 2 wt% PCS, 1 wt% P123, 1 wt% TMSB | 4.0-1.0V at rate of ±C/10, and then +C/5, -1C |
| 5B | Three additives, long term cycling | INFC17 | Yes (En' Safe 92) | TEL 66d | 1.5m NaBF4 Tetraglyme:diglyme at 1:1 wt/wt ratio with 2 wt% PCS, 1 wt% P123, 1 wt% TMSB | 4.0-1.0V at rate of ±C/10, and then +C/5, -1C |

(continued)

| Exp No. | Experiment type | Cell No. | Nucleation layer on anode current collector? | Electrolyte composition Ref. | Electrolyte composition | Cycling conditions |
|---|---|---|---|---|---|---|
| 5C | Three additives, long term cycling | INFC19 | Yes (En' Safe 92) | TEL 66d | 1.5m NaBF4 Tetraglyme:diglyme at 1:1 wt/wt ratio with 2 wt% PCS, 1 wt% P123, 1 wt% TMSB | 4.0-1.0V at rate of +C/10, - 1C, and then +C/5, -1C |
| 5D | Three additives, long term cycling | INFC20 | Yes (En' Safe 92) | TEL 66d | 1.5m NaBF4 Tetraglyme:diglyme at 1:1 wt/wt ratio with 2 wt% PCS, 1 wt% P123, 1 wt% TMSB | Cycles 1-5 at 3.0 - 1 V at +C/10,-1C (Conditioning cycles), then 4.0-1.0V at rate of +C/10, -1C (cycles 6-7), and then +C/5, -1C |
| 6A | Alternate three additives, high voltage | INFC93 | Yes (En' Safe 92) | TEL 85b | 1.5m NaBF4 Tetraglyme:diglyme at 1:1 wt/wt ratio with 0.5 wt% PCS, 1 wt% P123, 2 wt% Trimethoxyboroxine | 4.0-1.0V at rate of +C/5, -1C |
| 6B | Alternate three additives, high voltage | INFC100 | Yes (En' Safe 92) | TEL 66U | 1.5m NaBF4 Tetraglyme:diglyme at 1:1 wt/wt ratio with 0.5 wt% PCS, 1 wt% P123, 2 wt% TMSP | 4.0-1.0V at rate of +C/5, -1C |
| 6C | Alternate three additives, high voltage | INFC105 | Yes (En' Safe 92) | TEL 85g | 1.5m NaBF4 Tetraglyme:diglyme at 1:1 wt/wt ratio with 2 wt% PST, 1 wt% P123 and 1 wt% TMSB | 4.0-1.0V at rate of +C/5, -1C |
| 6D | Alternate three additives, high voltage | INFC106 | Yes (En' Safe 92) | TEL 85h | 1.5m NaBF4 Tetraglyme:diglyme at 1:1 wt/wt ratio with 2 wt% SUL, 1 wt% P123 and 1 wt% TMSB | 4.0-1.0V at rate of +C/5, -1C |
| 6E | Alternate three additives, high voltage | INFC107 | Yes (En' Safe 92) | TEL 85i | 1.5m NaBF4 Tetraglyme:diglyme at 1:1 wt/wt ratio with 2 wt% 1,3,6-Hexantricarbonitrile, 1 wt% P123 and 1 wt% TMSB | 4.0-1.0V at rate of +C/5, -1C |
| 6F | Alternate four additives, high voltage | INFC81 | Yes (En' Safe 92) | TEL 66V | 1.5m NaBF4 Tetraglyme:diglyme at 1:1 wt/wt ratio with 0.5 wt% PCS, 1 wt% P123, 2 wt% TMSB, 2 wt% HTC | 4.0-1.0V at rate of +C/5, -1C |

(continued)

| Exp No. | Experiment type | Cell No. | Nucleation layer on anode current collector? | Electrolyte composition Ref. | Electrolyte composition | Cycling conditions |
|---|---|---|---|---|---|---|
| 7A | Three additives, effect of substrate, low voltage | INFC73 | No | TEL 66P | 1.5m NaBF4 Tetraglyme:diglyme at 1:1 wt/wt ratio with 0.5 wt% PCS, 1 wt% P123, 2 wt% TMSB | 3.7-1.0V at rate of +C/5, -1C |
| 7B | Three additives, effect of substrate, low voltage | INFC74 | No | TEL 66P | 1.5m NaBF4 Tetraglyme:diglyme at 1:1 wt/wt ratio with 0.5 wt% PCS, 1 wt% P123, 2 wt% TMSB | 3.7-1.0V at rate of +C/5, -1C |
| 7C | Three additives, effect of substrate, low voltage | INFC75 | No | TEL 66P | 1.5m NaBF4 Tetraglyme:diglyme at 1:1 wt/wt ratio with 0.5 wt% PCS, 1 wt% P123, 2 wt% TMSB | 3.7-1.0V at rate of +C/5, -1C |
| 7D | Three additives, effect of substrate, low voltage | INFC82 | Yes (C65 layer on Al) | TEL 66P | 1.5m NaBF4 Tetraglyme:diglyme at 1:1 wt/wt ratio with 0.5 wt% PCS, 1 wt% P123, 2 wt% TMSB | 3.7-1.0V at rate of +C/5, -1C |
| 7E | Three additives, effect of substrate, low voltage | INFC83 | Yes (C65 layer on Al) | TEL 66P | 1.5m NaBF4 Tetraglyme:diglyme at 1:1 wt/wt ratio with 0.5 wt% PCS, 1 wt% P123, 2 wt% TMSB | 3.7-1.0V at rate of +C/5, -1C |
| 7F | Three additives, effect of substrate, low voltage | INFC76 | Yes (C65 layer on Al) | TEL 66P | 1.5m NaBF4 Tetraglyme:diglyme at 1:1 wt/wt ratio with 0.5 wt% PCS, 1 wt% P123, 2 wt% TMSB | 3.7-1.0V at rate of +C/5, -1C |
| 7G | Three additives, effect of substrate, low voltage | INFC96 | Yes (C65 layer on En' Safe 92) | TEL 66P | 1.5m NaBF4 Tetraglyme:diglyme at 1:1 wt/wt ratio with 0.5 wt% PCS, 1 wt% P123, 2 wt% TMSB | 3.7-1.0V at rate of +C/5, -1C |
| 7H | Three additives, effect of substrate, low voltage | INFC97 | Yes (C65 layer on Al) | TEL 66P | 1.5m NaBF4 Tetraglyme:diglyme at 1:1 wt/wt ratio with 0.5 wt% PCS, 1 wt% P123, 2 wt% TMSB | 3.7-1.0V at rate of +C/5, -1C |
| 8A | Three additives, effect of additive wt%, high voltage | INFC84 | Yes (En' Safe 92) | TEL 66W | 1.5m NaBF4 Tetraglyme:diglyme at 1:1 wt/wt ratio with 7 wt% PCS, 1 wt% P123, 2 wt% TMSB | 4.0-1.0V at rate of +C/5, -1C |

(continued)

| Exp No. | Experiment type | Cell No. | Nucleation layer on anode current collector? | Electrolyte composition Ref. | Electrolyte composition | Cycling conditions |
|---|---|---|---|---|---|---|
| 8B* | Three additives, effect of additive wt%, high voltage | INFC85 | Yes (En' Safe 92) | TEL 66X | 1.5m NaBF4 Tetraglyme:diglyme at 1:1 wt/wt ratio with 15 wt% PCS, 1 wt% P123, 2 wt% TMSB | 4.0-1.0V at rate of +C/5, -1C |
| 8C | Three additives, effect of additive wt%, high voltage | INFC91 | Yes (En' Safe 92) | TEL 66Y | 1.5m NaBF4 Tetraglyme:diglyme at 1:1 wt/wt ratio with 0.5 wt% PCS, 1 wt% P123, 8.5 wt% TMSB | 4.0-1.0V at rate of +C/5, -1C |
| 8D | Three additives, effect of additive wt%, high voltage | INFC90 | Yes (En' Safe 92) | TEL 66Z | 1.5m NaBF4 Tetraglyme:diglyme at 1:1 wt/wt ratio with 0.5 wt% PCS, 1 wt% P123, 15 wt% TMSB | 4.0-1.0V at rate of +C/5, -1C |
| 8E | Three additives, effect of additive wt%, high voltage | INFC88 | Yes (En' Safe 92) | TEL 85 | 1.5m NaBF4 Tetraglyme:diglyme at 1:1 wt/wt ratio with 0.5 wt% PCS, 7.5 wt% P123, 2 wt% TMSB | 4.0-1.0V at rate of +C/5, -1C |
| 8F | Three additives, effect of additive wt%, high voltage | INFC89 | Yes (En' Safe 92) | TEL 85a | 1.5m NaBF4 Tetraglyme:diglyme at 1:1 wt/wt ratio with 0.5 wt% PCS, 15 wt% P123, 2 wt% TMSB | 4.0-1.0V at rate of +C/5, -1C |
| 9A | Three additives, alternate voltage windows | INFC101 | Yes (En' Safe 92) | TEL 66d | 1.5m NaBF4 Tetraglyme:diglyme at 1:1 wt/wt ratio with 2 wt% PCS, 1 wt% P123, 1 wt% TMSB | 4.05-1.0V at rate of +C/5, - 1C |
| 9B | Three additives, alternate voltage windows | INFC102 | Yes (En' Safe 92) | TEL 85e | 1.5m NaBF4 Tetraglyme:diglyme at 1:1 wt/wt ratio with 2 wt% PCS, 1 wt% P123, 2 wt% TMSB | 4.05-1.0V at rate of +C/5, - 1C |
| 9C | Three additives, alternate voltage windows | INFC103 | Yes (En' Safe 92) | TEL 85f | 1.5m NaBF4 Tetraglyme:diglyme at 1:1 wt/wt ratio with 1 wt% PCS, 1 wt% P123, 2 wt% TMSB | 4.05-1.0V at rate of +C/5, - 1C |
| 9D | Three additives, alternate voltage windows | FPC220245 | Yes (En' Safe 92) | TEL 66P | 1.5m NaBF4 Tetraglyme:diglyme at 1:1 wt/wt ratio with 0.5 wt% PCS, 1 wt% P123, 2 wt% TMSB | 4.0-2.5V at rate of +C/10, - 1C, and then +C/5, -1C |

**Example 1**

Performance of anode-free sodium cells using 1.5m $NaBF_4$ in Tetraglyme:diglyme at 1:1 wt/wt (TEL 66i).

The cycling performance was investigated with TEL 66i using an anode current collector without a nucleation layer (INFC 59) and an anode current collector with a nucleation layer (INFC 53; INFC 58). In particular, INFC 53; INFC 58 both used a carbon-containing nucleation layer i.e. INFC 53 used an "En' safe 92 Foil" current collector and INFC 58 used a 11.3 GSM C65 layer on Al foil.

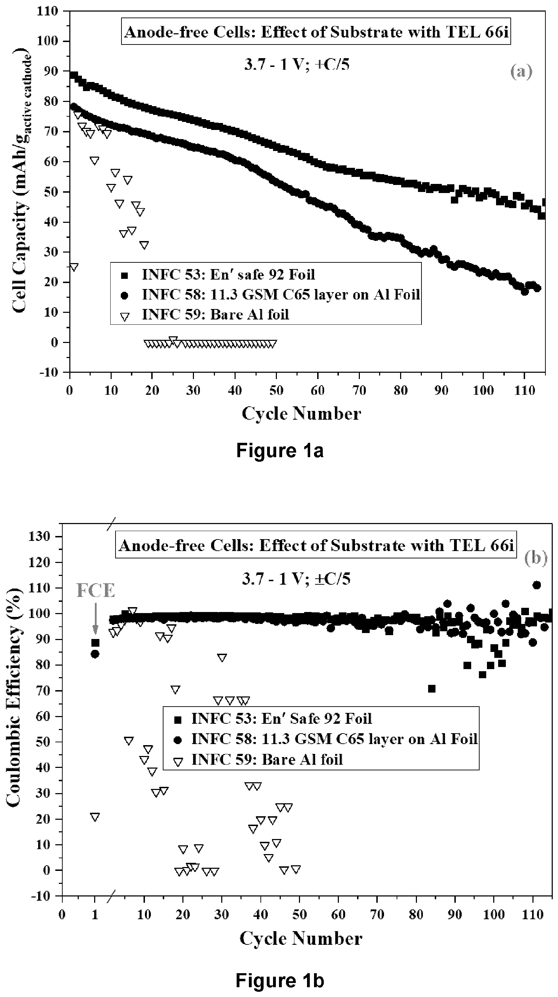

Figures 1a and 1b show the Na plating-stripping process for the three cells over 50 - 110 cycles when cycled between 3.7 and 1.0V at rate of $\pm$C/5.

From the results shown in Figure 1a, it was seen that INFC 53 and INFC 58 led to higher capacities within a 3.7 - 1.0V window, than INFC 59 under the same cycling conditions. Specifically, the delivered capacity at cycle 50 for INFC 53 was 65 mAh/g, whereas the delivered capacity at cycle 50 for INFC 59 was 0 mAh/g.

From the results shown in Figure 1b, it was observed that a stable coulombic efficiency close to 100% was achieved throughout the cycling for both INFC 53 and INFC 58 (for example, coulombic efficiency was around 99 % for INFC 53 and around 98 % for INFC 58 at the cycle 50 mark), which was indicative of very stable Na plating and stripping. The coulombic efficiency for INFC 59 was shown to be poor, as is clear from Figure 1b.

**Example 2**

Lower voltages

Performance of anode-free sodium cells using 1.5M $NaBF_4$ in Tetraglyme:diglyme at 1:1 wt/wt at lower voltages with no additives or one type of additive as shown Table 2.

The cycling performance was investigated with TEL 66L or TEL 66n at low voltage (i.e between 3.7 and 1.0V) using an "En' Safe 92 Foil" anode.

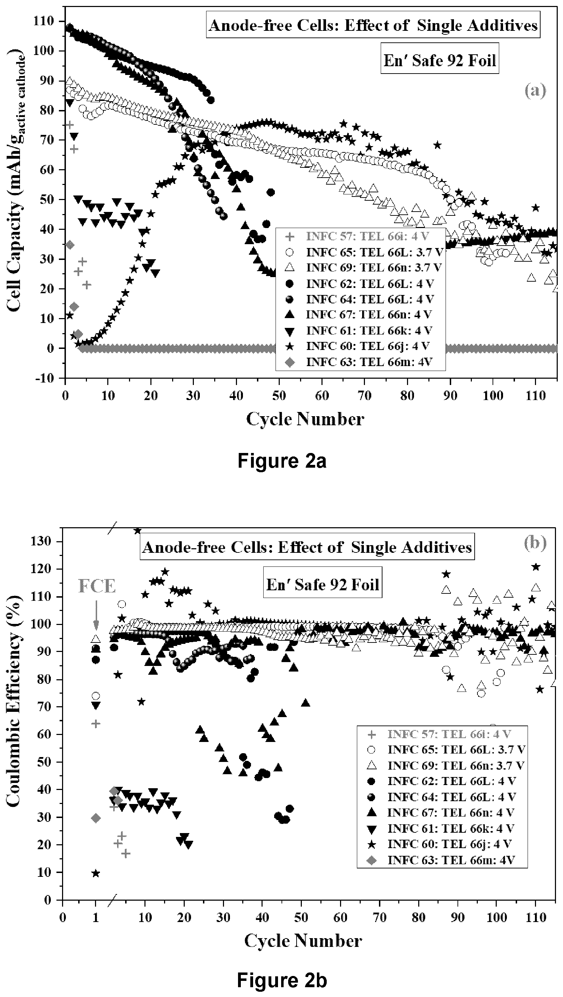

Figures 2a and 2b show the Na plating-stripping process for the two cells (INFC 65; INFC 69) when cycled between 3.7 and 1.0V at a rate of +C/5, -1C.

From the results shown in Figure 2a, it was seen that INFC 65 and INFC 69 led to similar cathode discharge capacities within a 3.7 - 1.0V window, compared against the cathode discharge capacity of cell INFC 53 which used a control electrolyte composition (TEL 66i) as seen from Figure 1a. Cells INFC 53, INFC 65, and INFC 69 each used an "En' safe 92 Foil" anode current collector.

Specifically, the delivered capacity at cycle 30 for INFC 65 and INFC 69 was 72.9 mAh/g and 76 mAh/g respectively, whereas the delivered capacity at cycle 30 for INFC 53 was 73.9 mAh/g as shown by Figure 1a. Such similar capacities were observed despite cells INFC 65 and INFC 69 being discharged at a faster rate of -1C (one-hour discharge), compared to cell INFC 53 being discharged at a slower rate of -C/5 (five-hour discharge).

It is known art that as the C rate of discharge of a cell increases, the delivered capacity is expected to decrease. Thus, the results for INFC 65 and INFC 69 led to the conclusion that improvements in electrochemical performance are observed by the addition of a boron-containing additive (i.e. TMSB). The results also show an improved capacity for INFC 69, compared to INFC 65 which can be attributed to the use of a higher amount of TMSB (i.e. 1 wt% vs 2 wt%).

From the results shown in Figure 2b, it was also observed that a stable coulombic efficiency close to 100% was achieved throughout the cycling for both INFC 65 and INFC 69, which was indicative of very stable Na plating and stripping. This was comparable, or if not, slightly improved, compared to the coulombic efficiency for INFC 53 as shown from Figure 1b.

However, further benefits of the use of additives according to the present invention were seen at higher voltages as discussed below.

Higher voltages

Performance of anode-free sodium cells using 1.5m $NaBF_4$ in Tetraglyme:diglyme at 1:1 wt/wt at higher voltages with no additives or one type of additive as shown Table 2. The voltage profile was increased from a 3.7 - 1.0V window, to a 4.0 - 1.0V window.

Figures 2a and 2b show the Na plating-stripping process for five cells using electrolyte compositions according to the present invention (i.e. INFC 62; INFC 64; INFC 67; INFC 61; and INFC 60) when cycled between 4.0 and 1.0V.

Results are also shown for two cells not according to the present invention (i.e. INFC 57; and INFC 63) when cycled between 4.0 and 1.0V.

From the results shown in Figure 2a, it was seen that each of INFC 62; INFC 64; INFC 67; INFC 61; and INFC 60 led to higher capacities within a 4.0 - 1.0V window, than INFC 57 and INFC 63, which used either no additive (INFC 57) or an additive not according to the present invention (INFC 63).

Cells with borate-containing additives (INFC 62; INFC 64; and INFC 67) showed greater capacity performance compared to cells with sulfur-containing additives (INFC 60) or surfactants (INFC 61). Cells with sulfur-containing additives (INFC 60) also showed greater capacity performance compared to cells with surfactants (INFC 61).

Specifically, the delivered capacity at cycle 20 for each of INFC 62; INFC 64; INFC 67; INFC 61; and INFC 60, was 95 mAh/g, 92.2 mAh/g, 88.9 mAh/g, 29.2 mAh/g, and 45.4 mAh/g, respectively.

In comparison to each of INFC 62; INFC 64; INFC 67; INFC 61; and INFC 60, cycling performance of INFC 57 and INFC 63 was extremely poor at 4 - 1 V, with both cells essentially failing 5 cycles.

Figure 2b also provides an indication of how the additives of the present invention influence performance.

It can be seen that the first cycle efficiency (FCE) of the cells where the electrolyte composition contained a borate-containing or a surfactant-containing additive, such cells were all significantly higher than the control samples: specifically, the FCE of INFC 62, INFC 64, INFC 67 and INFC 61 were 87.2 %, 91.3 %, 91 % and 70.9 %, and these FCE values were all higher than INFC 57 without additives (64 %), or INFC 63 containing an additive not according to the present invention (29.8 %), i.e. a FEC additive.

Although the FCE of INFC 60, containing the sulfur-containing additive (i.e. PCS), was very low (9.7 %), the subsequent increase in capacity and stable cycling points with reference to Figure 2a points to a difference in mechanism of PCS as the film-forming additive.

Evidently, if the electrolyte contains 2 wt% PCS as the sole additive, PCS's decomposition first results in lower FCEs but the decomposition products then appropriately modify the anode current collector substrate to then result in more stable sodium plating/stripping in the subsequent cycles. Thus, this data points to a difference in mechanism of the additives studied and these results could not have been previously anticipated. Moreover, this could explain higher capacities observed for PCS-based electrolytes.

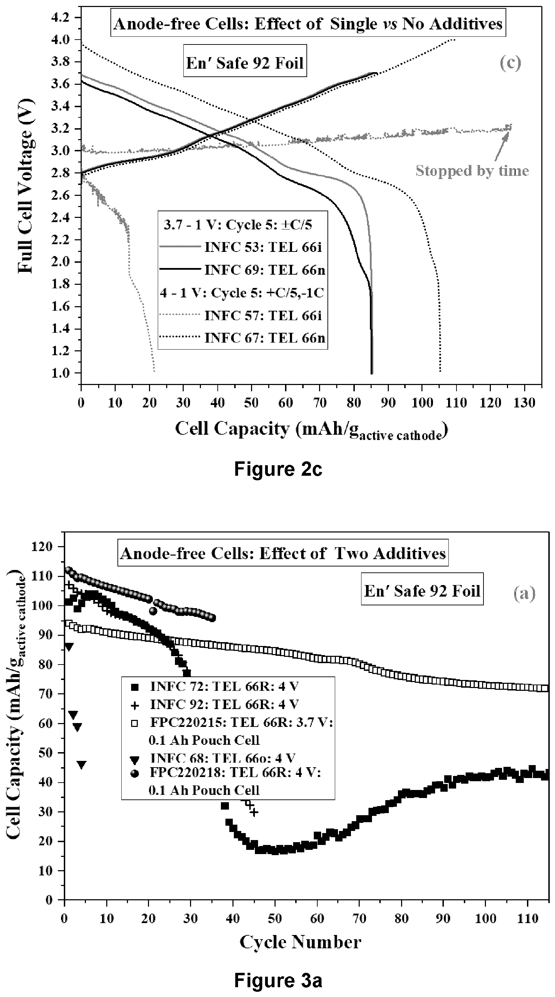

Figure 2c further shows the cycling performance for anode-free sodium cells that use electrolyte compositions of the present invention. More particularly, Figure 2c shows a plot of full cell voltage (V) vs cathode discharge capacity (mAh/g) (i.e voltage-capacity cycling curve) for the 5th cycle for cells that use electrolyte compositions of the present invention (sample TEL 66n), compared against cells which use a control electrolyte composition (sample TEL 66i). Specifically, cells INFC 69 and INFC 67 using TEL 66n were compared against cells INFC 53 and INFC 57 using TEL 66i.

It can be seen that when cell INFC 53 and INFC 69 were cycled within a 3.7 - 1 V window (i.e. at lower voltages), cell INFC 69 delivers essentially the same capacity as cell INFC 53. In comparison, when cell INFC 57 and INFC 67 were cycled within a 4.0 - 1 V window (i.e. at higher voltages), cell INFC 67 delivered a significantly greater capacity than cell INFC 57.

More particularly, when cell INFC 57 was cycled to higher voltages, it progressively caused more electrolyte oxidation, and after two further cycles, INFC 57 refused to charge to 4 V to completion. Figure 2c further shows that a cell voltage of 3.2V had been achieved on the 5th cycle for cell INFC 57, after a charge cycle at a C-rate of C/5 for 7 hours. Those skilled in the art would understand that a higher cell voltage (e.g. 4V) should have been achieved under these conditions, and by/before 5 h. Instead, this data suggests that the continuous electrolyte oxidation during cycling rendered the control electrolyte unusable at higher voltages.

Advantageously for cell INFC 67 that used an electrolyte composition of the present invention (sample TEL 66n), the cell could be charged to around 4V on the 5th cycle. Thus this data points to the Applicant's understanding that TMSB can impart a surprising oxidative stability to a glyme-based electrolyte, particularly when used in a anode-free sodium-ion cell.

**Example 3**

Performance of anode-free sodium cells using 1.5m $NaBF_4$ in Tetraglyme:diglyme at 1:1 wt/wt at higher voltages with two types of additives were tested in cells having a voltage profile between 4.0 - 1.0V. More particularly, this experiment identifies surprising synergistic effects by the use of electrolyte compositions of the present invention that comprise two additives, after having established the behaviour of electrolyte compositions of the present invention that comprise one additive, in the previous experiment.

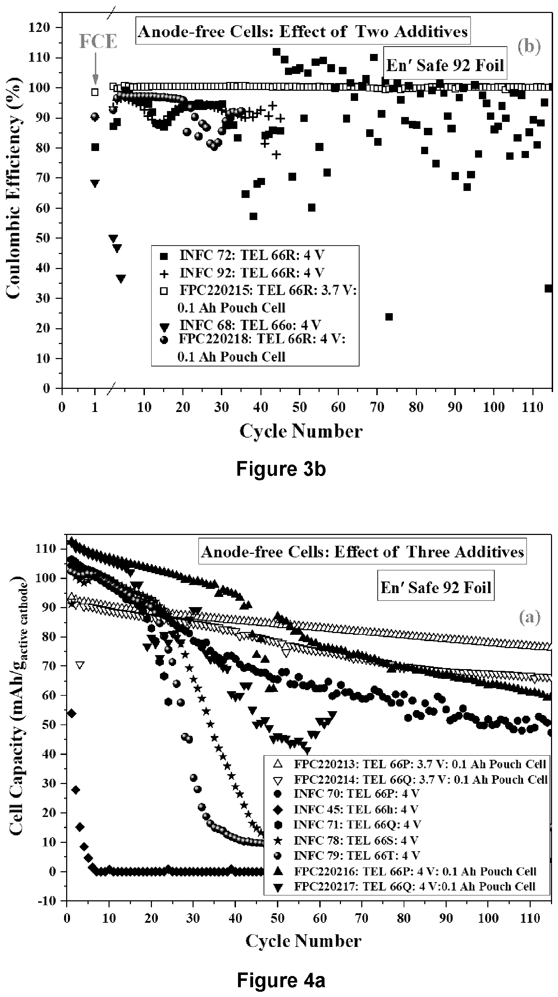

Figures 3a and 3b show the Na plating-stripping process for four cells (INFC 72, INFC 92, FPC220215 and FPC220218) that use two different types of additives (i.e. a boron-containing additive (TMSB) in combination with a surfactant (P-123)) according to the present invention (sample TEL 66R).

Figures 3a and 3b also show the Na plating-stripping process for cell INFC 68 that uses one type of additive according to the present invention (i.e. a boron-containing additive (TMSB)) in combination with an additive not according to the present invention (i.e. a carbonate-containing additive (VC) (sample TEL 66o).

From the results shown in Figure 3a, it was seen that each of INFC 72, INFC 92 and FPC220218 led to higher capacities within a 4.0 - 1.0V window, than INFC 68 which used one type of additive according to the present invention in combination with an additive not according to the present invention. Specifically, the delivered capacity at cycle 4 for each of INFC 72, INFC 92, FPC220218, and INFC 68 was 101 mAh/g, 104.1 mAh/g, 109.6 mAh/g and 46.5 mAh/g, respectively.

This demonstrates that the choice of additives is important for performance, and that different combinations of additives result in different electrochemical performance, which is not predictable.

It is therefore preferable that the non-aqueous electrolyte composition according to the present invention is substantially free of one or more carbonate-based compounds such as vinylene carbonate.

Further still, cells INFC 72, INFC 92 and FPC220218 each showed a greater or similar capacity performance compared to cells INFC 62; INFC 64; and INFC 67 that used a boron-containing additive (TMSB) alone or cell INFC 61 that used a surfactant (P123) alone.

Specifically, the delivered capacity at cycle 20 for each of INFC 72, INFC 92 and FPC220218 was 92.3 mAh/g, 92.5 mAh/g and 102.3 mAh/g, respectively, compared to delivered capacity at cycle 20 for each of INFC 62, INFC 64, INFC 67, INFC 61, and INFC 60, which was 95 mAh/g, 92.2 mAh/g, 88.9 mAh/g, 29.2 mAh/g, and 45.4 mAh/g, respectively.

This synergic performance is highly unexpected, and again demonstrates that different combinations of additives lead to different electrochemical performance, which is not predictable.

From the results shown in Figure 3b, it was observed that a stable coulombic efficiency close to 100% (around 92 - 96 % at cycle 20) was achieved throughout the cycling for each of INFC 72, INFC 92 and FPC220218, which was indicative of very stable Na plating and stripping. In contrast, a coulombic efficiency of 36.9 % at cycle 4 was observed for cell INFC 68.

As also verified by the cell cycling of FPC220215 that used sample TEL 66R, good cycling was seen even at different cycling conditions at different voltage windows (for example, stable cycling at 3.7 - 1 V was seen with 78.4 % capacity retention in 110 cycles).

### Example 4

Lower voltage

Performance of anode-free sodium cells using 1.5m $NaBF_4$ in Tetraglyme:diglyme at 1:1 wt/wt at lower voltages with three types of additives as shown in Table 2. The cells were tested in a voltage profile of from 3.7 - 1.0V.

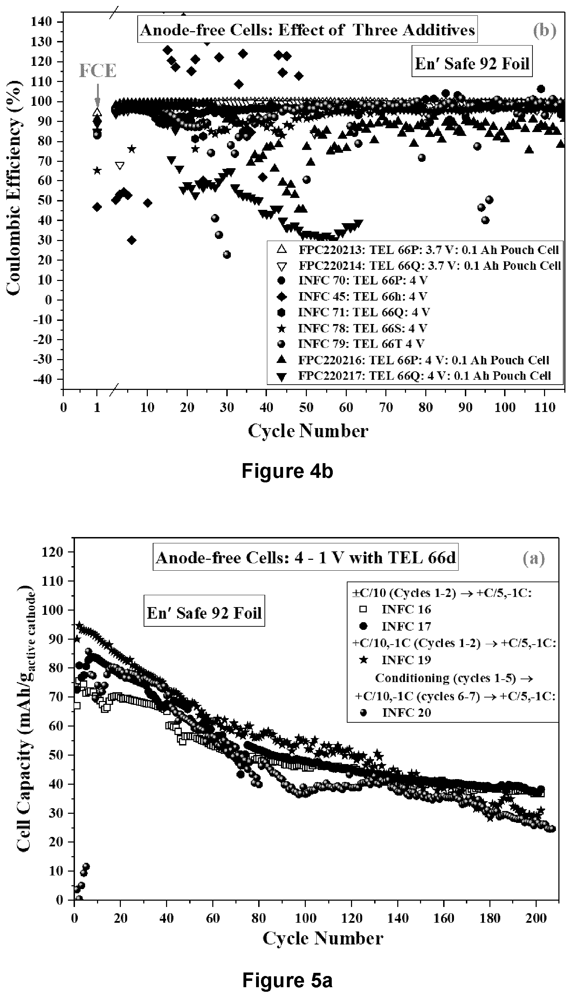

Figures 4a and 4b show the Na plating-stripping process for cell FPC220213 that used three different types of additives (i.e. a boron-containing additive (TMSB) in combination with both a sulfur-containing additive (PCS) and a surfactant (P123)) according to the present invention (i.e. sample TEL 66P).

Results are also shown in Figures 4a and 4b for a cell (FPC220214) which uses two types of additives according to the present invention (i.e. a boron-containing additive (TMSB) and a surfactant (P123)) in combination with an additive not according to the present invention (i.e. a carbonate-containing additive (FEC)). This is sample TEL 66Q.

From the results shown in Figure 4a, it was seen that FPC220213 led to higher capacities within a 3.7 - 1.0V window than FPC220214 under the same cycling conditions. Specifically, the delivered capacity at cycle 110 for each of FPC220213 and FPC220214 was 76.9 mAh/g and 66.9 mAh/g, respectively.

Higher voltage

Performance of anode-free sodium cells using 1.5m $NaBF_4$ in Tetraglyme:diglyme at 1:1 wt/wt at higher voltages with additives as shown Table 2. The voltage profile was increased from a 3.7 - 1.0V window, to a 4.0 - 1.0V window.

Figures 4a and 4b show the Na plating-stripping process for cell FPC220216 that used sample TEL 66P in a 4.0 - 1.0V window, compared to cell FPC220217 that used sample TEL 66Q also in 4.0 - 1.0V window.

From the results shown in Figures 4a and 4b, it was seen that FPC220216 led to higher capacities within a 4.0 - 1.0V window than FPC220217 under the same cycling conditions: after cycle 20, the former delivered a specific capacity of 103.3 mAh/g while the latter's specific capacity was just 79.7 mAh/g.

FPC220216 using TEL 66P also showed a showed greater capacity performance compared to cells with boron-containing additives (INFC 62; INFC 64; and INFC 67) alone, sulfur-containing additives alone (INFC 60), or surfactants (INFC 61) alone, as discussed previously in Example 2 (refer to Figure 2a).

Specifically, the delivered capacity at cycle 20 for each of INFC 60, INFC 61, INFC 62, INFC 64 and INFC 67 was 45.3 mAh/g, 29.2 mAh/g, 95 mAh/g, 92.2 mAh/g and 88.9 mAh/g, respectively. These capacity values were lower, sometimes significantly lower, than the specific capacities seen for cell FPC220216 after cycle 20 (103.3 mAh/g), pointing to the surprising beneficial effects of using TEL 66P.

Anode-free cells utilising glyme-based electrolytes containing three additives according to the present invention also outperformed those anode-free cells utilising glyme-based electrolytes containing three additives wherein one additive was not according to the present invention.

With a focus on anode-free cells of similar capacities (~6 mAh) in Figure 4a and Figure 4b, it can be seen that the cycling stability of INFC 70 (TEL 66P), INFC 78 (TEL 66S) and INFC 79 (TEL 66T) was better than that of INFC 45 (TEL 66h) and INFC 71 (TEL 66Q).

Specifically, 20th cycle's discharge capacity of the various cells was:

INFC 70 (TEL 66P) = 90.8 mAh/g
INFC 78 (TEL 66S) = 93.1 mAh/g
INFC 79 (TEL 66T) = 90.2 mAh/g
INFC 45 (TEL 66h) = 0.02 mAh/g
INFC 71 (TEL 66Q) = 83.1 mAh/g

It is therefore preferable that the non-aqueous electrolyte composition according to the present invention is substantially free of one or more carbonate-based compounds such as fluoroethylene carbonate.

**Example 5**

High voltage; Effect of three additives; Long-term cycling

The long term cycling performance was investigated between 4.0V to 1V for anode-free sodium cells (INFC 16, INFC 17, INFC 19 and INFC20) over 200 cycles, which used an electrolyte composition which contained 1.5m NaBF$_4$ in Tetraglyme:diglyme at 1:1 wt/wt with a mixture of 2 wt% PCS, 1 wt% P123, and 1 wt% TMSB (sample TEL 66d).
INFC 16, INFC 17, INFC 19 and INFC20 were all cycled between 4.0 - 1.0 V using TEL 66d, but with slight differences in the cycling rates:

- INFC 16 and INFC 17: the first two cycles at ±C/10, followed by 200 cycles at +C/5,-1C.
- INFC 19: the first two cycles at +C/10,-1C, followed by 200 cycles +C/5,-1C.
- INFC 20: the first five cycles at +C/10,-1C at 3 - 1 V, followed by two cycles at +C/10,-1C and then finally, followed by 200 cycles at +C/5,-1C.

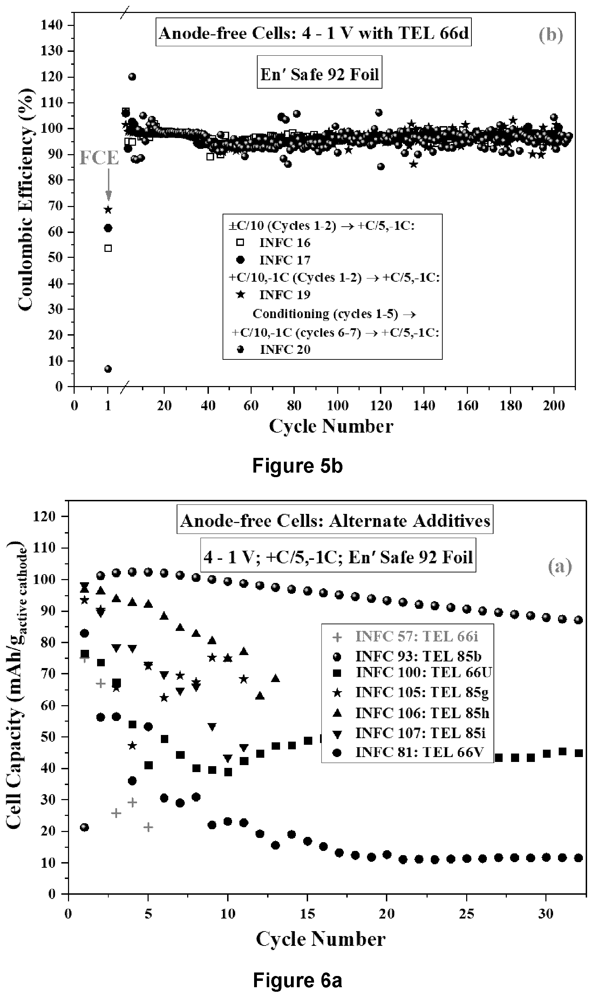

As can be seen from Figure 5a, all four cells demonstrated good capacity retentions after 200 cycles at +C/5,-1C: the capacity retention for each cell, relative to the first cycle at +C/5,-1C, was as INFC 16 (50.4 %), INFC 17 (49.9 %), INFC 19 (33.3 %) and INFC 20 (31.9 %).
As shown in Figure 5b, the stable coulombic efficiencies of all cells were around 100 % throughout the +C/5,-1C cycle life: as an example, the coulombic efficiency of the 200th cycle at +C/5,-1C for each cell was INFC 16 (98.5 %), INFC 17 (100.5 %; the efficiency of the 199th cycle was 97.6 %), INFC 19 (95.2 %; the efficiency of the 199th cycle was 101.5 %) and INFC 20 (97.2 %).
These coulombic efficiency values after 200 cycles are significantly higher the values obtained for cell INFC 57 cycled with the control electrolyte composition (sample TEL 66i). Indeed, as shown in Figure 2a for cell INFC 57, the coulombic efficiency at cycle 5 (the 3rd +C/5,-1C cycle) was just 16.99 % (refer to Figure 2c for the corresponding cycling profile for this cell).
As discussed above in example 2, the Applicant understands that the low coulombic efficiency values for cells cycled with the control electrolyte composition (sample TEL 66i) is a result of poor oxidative stability when cycling at high voltages. Such poor oxidative stability is not however observed for anode-free sodium cells that are cycled with sample TEL 66d at higher voltages as demonstrated by this long-term cycling experiment.

**Example 6**

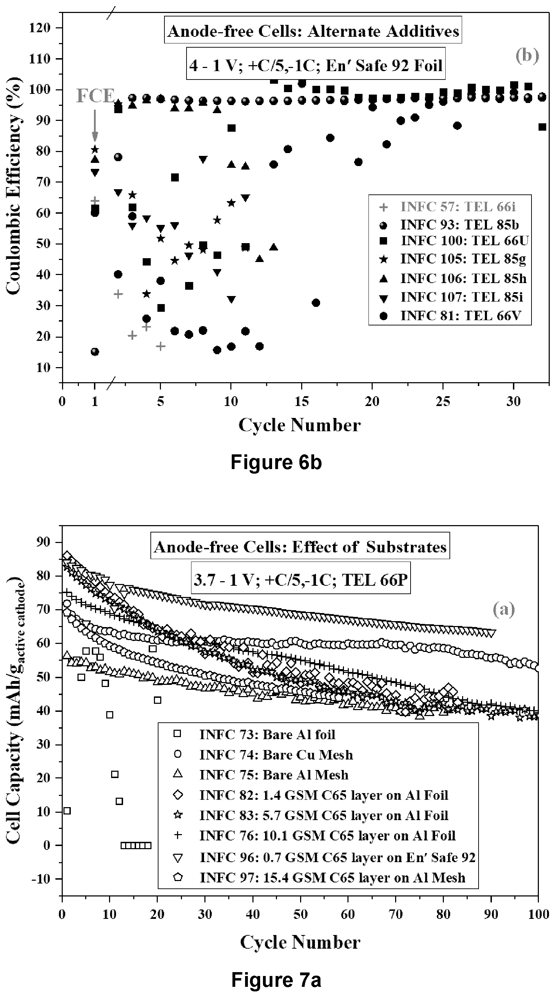

The cycling performance was investigated between at 4 - 1 V at +C/5,-1C rate for anode-free sodium cells which used an electrolyte composition which contained 1.5m NaBF4 in Tetraglyme:diglyme at 1:1 wt/wt with additives that have not been used in any of the previous experiments. Such compositions are specified in Experiments 6A - 6F in Table 2
Figures 6a / 6b show a plot of cathode discharge capacity (mAh/g) / % coulombic efficiency vs cycle number for cells that use electrolyte compositions of the present invention (samples TEL 85b, TEL 66U, TEL 85g, TEL 85h, TEL 85i, and TEL 66V), compared against a cell which uses a control electrolyte composition (sample TEL 66i). Taking each sample in turn:

TEL 85b (boroxine-containing):

Cell INFC 93 was cycled with TEL 85b and the cycling performance was shown to be significantly more stable than cell INFC 57 which was cycled with control electrolyte composition TEL 66i. Surprisingly, the FCE of INFC 93 was lower than that of INFC 57, but the subsequent coulombic efficiencies were around 100 %, significantly higher than the efficiencies of INFC 57 (for example, the coulombic efficiency of the 5th cycle of INFC 93 was 97.1 %, compared with just 16.99 % for INFC 57).

<u>TEL 66U (phosphite-containing)</u>

Cell INFC 100 was cycled with TEL 66U and the cycling performance was shown to be poorer than cell INFC 93 that was cycled with TEL 85b, but significantly better than cell INFC 57 that was cycled with the control electrolyte composition TEL 66i: for example, the cycle 5 capacity of INFC 100 was 41.2 mAh/g, significantly higher than the 21.4 mAh/g delivered by INFC 57.

<u>TEL 85g (sultone-containing)</u>

Cell INFC 105 was cycled with TEL 85g and the cycling performance was shown to be better than cell INFC 57 that was cycled with the control electrolyte composition TEL 66i: for example, the cycle 5 capacity of INFC 105 was 72.6 mAh/g, significantly higher than the 21.4 mAh/g delivered by INFC 57.

<u>TEL 85h (sulfolane-containing)</u>

Cell INFC 106 was cycled with TEL 85h and the cycling performance was quite similar to cell INFC105 that was cycled with TEL 85g, but with improved metrics in cycling stability (cycle 5 capacity was 92.1 mAh/g for INFC 106, while it was 72.6 mAh/g for INFC 105) and subsequent stable coulombic efficiencies (cycle 5 coulombic efficiency was 97.2 % for INFC 106 while it was just 51.8 % for INFC 105), with similar FCE (77.3 % for INFC 106 vs 80.7 % for INFC 105). Cell INFC 106 showed much better performance than cell INFC 57 that was cycled with the control electrolyte composition TEL 66i.

<u>TEL 85i and TEL 66V (nitrile-containing)</u>

Cells INFC 107 and INFC81 were cycled with nitrile containing additive 1,3,6-Hexantricarbonitrile. In particular, cell INFC 107 was cycled with TEL 85i, and cell INFC81 was cycled with TEL 66V.
The cycling performance of INFC 107 using TEL 85i was shown to be better than cell INFC 57 that was cycled with the control electrolyte composition TEL 66i: for example, the cycle 5 capacity of INFC 107 was 73.2 mAh/g, significantly higher than the 21.4 mAh/g delivered by INFC 57.
Similarly, the cycling performance of INFC 81 using TEL 66v was shown to be better than cell INFC 57 that was cycled with the control electrolyte composition TEL 66i; for example, the cycle 5 capacity of INFC 81 was 53.3 mAh/g, significantly higher than the 21.4 mAh/g delivered by INFC 57.

**Example 7**

This experiment investigates the cycling performance of anode-free sodium cells constructed with different types of anode current collectors/substrates when using an electrolyte composition according to the present invention (TEL 66P). Such cells are cycled between 3.7 - 1.0 V at +C/5,-1C, and the experiments are indicated in Table 2 as Experiments 7A to 7H.

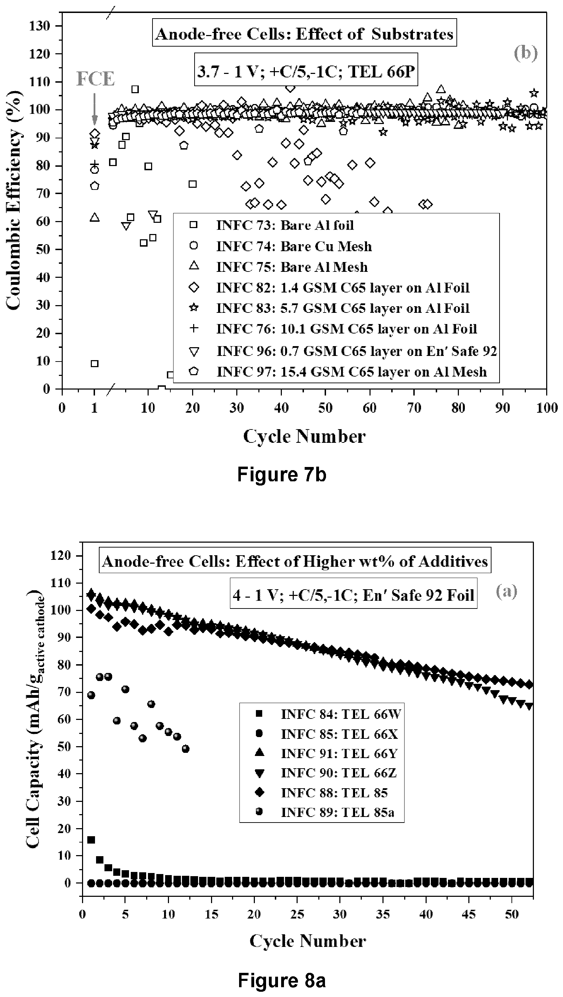

Figures 7a and 7b show a plot of cathode discharge capacity (mAh/g) / % coulombic efficiency vs cycle number to illustrate the cycling stability for cells (INFC 73, INFC 74, INFC 75, INFC 82, INFC 83, INFC 76, INFC 96, and INFC 97) that each use an electrolyte composition of the present invention (sample TEL 66P) but are each constructed with a different type of anode current collector/substrate.

<u>Pristine current collectors</u>

Three different types of pristine anode current collectors were investigated:

- INFC 73 used a pristine aluminium foil as the substrate;
- INFC 74 used a pristine copper mesh foil (the Microgrid® Cu 25 obtained from Dexmet Corporation); and
- INFC 75 used a pristine aluminium mesh foil (the Microgrid® Al 25 obtained from Dexmet Corporation).

From the results shown in Figure 7a, it is clear that INFC 73 showed the least favourable cycling performance; very erratic cycling - hallmarks of unreliable sodium plating/stripping process.
INFC 75 performed significantly better than INFC 73 on all metrics: INFC 75 showed more stable cycling (40 mAh/g in the 80th cycle, or 74.2 % capacity retention relative to the initial cycles) with high stable coulombic efficiencies (for example, the coulombic efficiency of the 80th cycle was 101.6 %).

INFC 74 resulted in even better metrics than INFC 75: INFC 74 showed higher capacities with better capacity retention after 80 cycles (58.6 mAh/g and 85.5 %, respectively) vs that of INFC 75, along with similarly high stable coulombic efficiency (the coulombic efficiency of INFC 75 of the 80th cycle was 99.3 %).

The experiment demonstrates that different anode current collectors can be used in anode-free sodium cells when using an electrolyte composition according to the present invention.

Current collectors comprising a nucleation layer

Five different types of anode current collectors comprising one or more carbon-containing nucleation layers were investigated as shown in Table 3:

- INFC 82, INFC 83 and INFC 76 each used one carbon-containing nucleation layer on aluminium foil;
- INFC 97 used one carbon-containing nucleation layer on aluminium mesh; and
- INFC 96 used two carbon-containing nucleation layers on aluminium foil (that is, the Applicant applied one carbon (C65) nucleation layer to an En' Safe 92 current collector, which itself is constructed from aluminium foil that comprises one carbon nucleation layer).

The carbon-containing nucleation layers were prepared by mixing carbon black (C65) as an active material and PVDF binder (C65:PVDF in a weight ratio of 90:10). A slurry was then obtained by adding NMP solvent and mixing. The slurry was subsequently doctor-bladed on to aluminium foil / aluminium mesh / En' Safe 92 current collector foils as indicated. The GSMs (loading of just C65) for each cell's substrate is as indicated in Figure 7a and Figure 7b.

The cycling performance of the cells using these coated substrates, specifically of INFC 82, INFC 83, INFC 76, INFC 96 and INFC 97, are compared below in Table 3:

Table 3

| Cell | C65 Coating GSM; Substrate | Cycle 1 Capacity (mAh/g) | FCE (%) | Cycle 40 Capacity (mAh/g) | Cycle 40 coulombic efficiency (%) | Capacity Retention of 40th cycle vs 1st cycle (%) |
|---|---|---|---|---|---|---|
| INFC 82 | 1.4 GSM; Al | 86.1 | 91.6 | 51.5 | 88.1 | 59.8 |
| INFC 83 | 5.7 GSM; Al | 82.8 | 87.6 | 52.3 | 96.9 | 63.2 |
| INFC 76 | 10.1 GSM; Al | 75.2 | 80.6 | 57.4 | 99.3 | 76.3 |
| INFC 96 | 0.7 GSM; En Safe 92 | 84.2 | 89.1 | 70.4 | 99.2 | 83.6 |
| INFC 97 | 15.4 GSM; Al Mesh | 69.2 | 72.8 | 47.9 | 99.4 | 69.2 |

As seen from the results in Table 3, cells cycled with TEL 66P showed good cycling performance on a range of different types of current collectors comprising one or more carbon-containing nucleation layers, at various coating GSMs.

For cells INFC 82, 83 and 76 that used a current collector fabricated from aluminium foil, as the GSM of the one or more carbon nucleation layer increased, the initial capacity and the FCE decreased, but the cycling stability increased.

INFC 96 that used a 0.7 GSM C65 coating on En' Safe 92 foil also showed very good performance metrics in terms of delivered capacity, FCE and cycling stability.

As also shown by the performance of INFC 97 relative to the performance of INFC 75, it can be seen that one or more carbon-containing nucleation layers (C65) on Al mesh enhances cycling performance: INFC 75 delivered 56.3 mAh/g in the first cycle (FCE = 61.4 %), significantly lower than the delivered capacity by INFC 97.

**Example 8**

Effect of Higher wt% of Additives

Performance of anode-free sodium cells using 1.5m $NaBF_4$ in Tetraglyme:diglyme at 1:1 wt/wt at higher voltages with three types of additives at higher wt% as shown in Table 2. The cells were tested in a voltage profile of from 4.0- 1.0V.

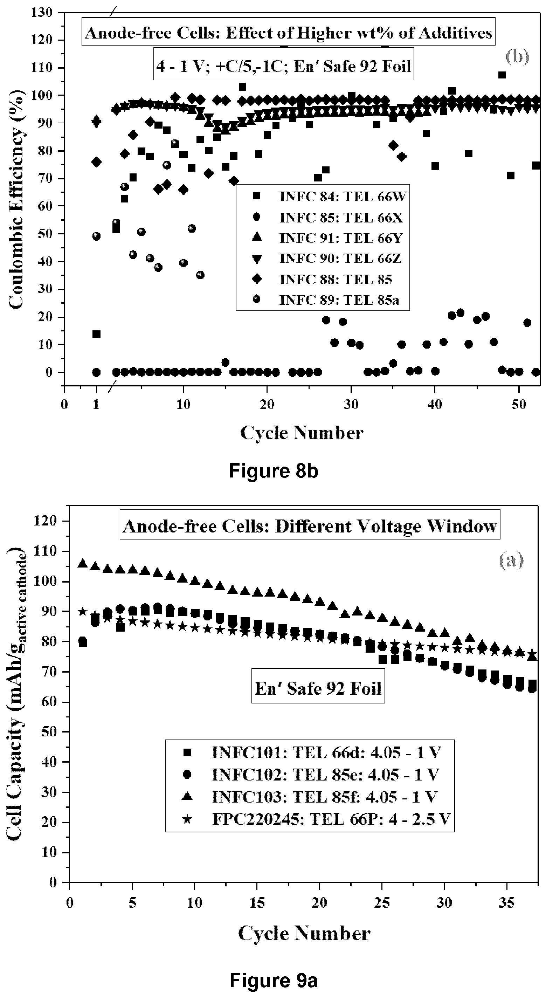

FIGURE 8a / 8b show a plot of cathode discharge capacity (mAh/g) / % coulombic efficiency vs cycle number for cells that use electrolyte compositions of the present invention (samples TEL 66W, TEL 66Y, TEL 66Z, TEL 85, and TEL 85a).

Higher wt% sulfur-containing (PCS)

Cell INFC 84 was cycled with 7 wt% PCS, and cell INFC 85 was cycled with 15 wt% PCS.

As shown from Figures 8a and 8b, the performance at such high wt% of PCS was quite poor, with both cells quickly failing within a few cycles.

Particularly striking was cell INFC 85, which did not show any reversible capacity, illustrating the negative effect on performance when the electrolyte composition contained 15 wt% PCS.

Higher wt% boron-containing (TMSB)

Cell INFC 91 was cycled with 8.5 wt% TMSB, and cell INFC 90 was cycled with 15 wt% TMSB.

As shown from Figures 8a and 8b, INFC 91 and INFC 90 both delivered high first discharge capacities (106.2 mAh/g and 105.2 mAh/g, respectively) at high FCE values (91.1 % and 90.3 %, respectively), with decent cycling stabilities after 50 cycles (capacity retention of 80.5 % and 80.6 % respectively, after 30 cycles).

Higher wt% surfactant (P123)

Cell INFC 88 was cycled with 7.5 wt% P123, and cell INFC 89 was cycled with 15 wt% P123.

As shown from Figures 8a and 8b, cell INFC 88 led to 100.6 mAh/g capacity in the first cycle with an FCE of 76.1 %. Upon increasing the amount of P123 to 15 wt%, cell INFC 89 showed a reduced first cycle capacity of 68.9 mAh/g at a lower FCE of 49.2 %.

Conclusions

Compared to cell INFC 57 which used a control electrolyte composition (TEL 66i), the following performance benefits in terms of higher discharge capacities and coulombic efficiencies (as shown in brackets) at the 5th cycle were observed under comparable conditions:

    INFC 57: 21.4 mAh/g (16.99 %)
    INFC 91: 102.7 mAh/g (97.2 %)
    INFC 90: 101.6 mAh/g (97.3 %)
    INFC 88: 95.9 mAh/g (97.3 %)
    INFC 89: 71.1 mAh.g (50.8 %)

Thus, good cycling performance of anode-free sodium cells can still be observed at higher wt% of additives.

**Example** 9

Effect of Alternate Voltage Windows

Performance of anode-free sodium cells using 1.5m $NaBF_4$ in Tetraglyme:diglyme at 1:1 wt/wt at higher voltages with three types of additives at higher wt% as shown in Table 2. The cells were tested in a voltage profile as indicated in Table 2 and discussed below.

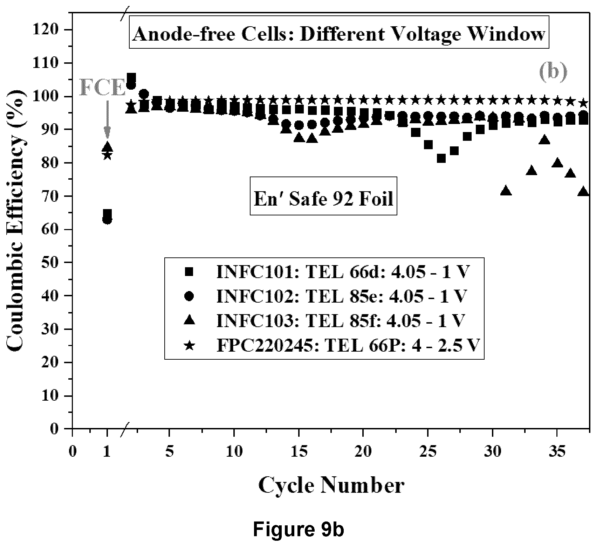

FIGURE 9a / 9b show a plot of cathode discharge capacity (mAh/g) / % coulombic efficiency vs cycle number for cells that use electrolyte compositions of the present invention (samples TEL 66d, TEL 85e, TEL 85f, and TEL 66P).

4.05 - 1 V

Cells were cycled over a wider voltage window of 4.05 - 1 V using either TEL 66d (cell INFC 101), TEL 85e (INFC 102), or TEL 85f (INFC 103). Data from the 10th cycle is shown below:

    INFC 101: 89.7 mAh/h (coulombic efficiency = 101.6 %; capacity retention = ~100 %)
    INFC 102: 89.4 mAh/g (coulombic efficiency = 95.6 %; capacity retention = ~100 %)
    INFC 103: 100 mAh/h (coulombic efficiency = 95.5 %; capacity retention = 95.2 %)

Capacity retention is calculated relative to the first cycle of the respective cell.

As from this data and that seen in Figures 9a and 9b these cells demonstrated good cycling stability and performance under these conditions.

4 - 2.5 V

Cell FPC220245 was cycled over a window of 4 - 2.5 V using TEL 66P. Data from the 10th cycle (relative to the 1st cycle) is shown below:

FPC220245: 84.6 mAh/g (coulombic efficiency = 98.9 %; capacity retention = 94 %)

Capacity retention is calculated relative to the first cycle of the respective cell.

These examples prove that anode-free sodium cells using electrolyte compositions of the present invention can show good cycling performance with stable cycling over different voltage windows, showing versatility.

The subject matter encompassed by the following numbered embodiments also forms part of the present invention, optionally in combination with the subject matter described above and/or defined in the claims that follow.

Numbered embodiment 1

A non-aqueous electrolyte composition comprising: one or more sodium-containing salts; and a solvent system which comprises: a first component which comprises one or more glyme-based solvents; and a second component which comprises one or more additives selected from:

- sulfur-containing compounds in an amount of no greater than about 10% by weight of the solvent system;
- boron-containing compounds in an amount of no greater than about 20% by weight of the solvent system;
- nitrile-containing compounds in an amount of no greater than about 10% weight of the solvent system;
- phosphorous-containing compounds in an amount of no greater than about 10% by weight of the solvent system;
- surfactants in an amount of no greater than about 20% by weight of the solvent system; and

wherein the total amount of one or more additives does not exceed about 20% by weight based on the weight of the solvent system.

Numbered embodiment 2

The non-aqueous electrolyte composition according to numbered embodiment 1, in which the second component comprises two or more additives comprising boron-containing compounds in an amount of >0 to <20% by weight of the solvent system and surfactants in an amount of >0 to < 20% by weight of the solvent system, and in which the total amount of two or more additives does not exceed about 20% by weight based on the weight of the solvent system.

Numbered embodiment 3

The non-aqueous electrolyte composition according to numbered embodiment 1, in which the second component comprises three or more additives comprising sulfur-containing compounds in an amount of >0 to <10% by weight of the solvent system, boron-containing compounds in an amount of >0 to <20% by weight of the solvent system, and surfactants in an amount of >0 to < 20% by weight of the solvent system, and in which the total amount of three or more additives does not exceed about 20% by weight based on the weight of the solvent system.

Numbered embodiment 4

The non-aqueous electrolyte composition according to any one of numbered embodiments 1 to 3, in which the sulfur-containing compounds are selected from sulfone-containing compounds, sulfate-containing compounds, and sulfonate-containing compounds.

Numbered embodiment 5

The non-aqueous electrolyte composition according to numbered embodiment 4, in which the sulfur-containing compounds are selected from: sulfolane, 3-methyl sulfolane, trimethyl sulfone, methyl phenyl sulfone, 1,3-propanediolcyclic sulfate (PCS), 1,5,2,4-dioxadithiane 2,2,4,4-tetraoxide, 1,3,2-Dioxathiolane 2,2-dioxide, 1-propene 1,3-sultone, and 1,3-propane sultone.

Numbered embodiment 6

The non-aqueous electrolyte composition according to numbered embodiment 4, in which the sulfur-containing compounds include 1,3-propanediolcyclic sulfate (PCS).

Numbered embodiment 7

The non-aqueous electrolyte composition according to any one of numbered embodiments 1 to 6, in which the boron-containing compounds are selected from borate-containing compounds and boroxine-containing compounds.

Numbered embodiment 8

The non-aqueous electrolyte composition according to numbered embodiment 7, in which the boron-containing compounds are selected from tris(trimethylsilyl) borate (TMSB), tris(2,2,2-trifluoroethyl) borate, trimethyl borate, triethyl borate, trimethoxyboroxine, and trimethylboroxine.

Numbered embodiment 9

The non-aqueous electrolyte composition according to numbered embodiment 1, in which the nitrile-containing compounds include 1,3-6-hexanetricarbonitrile.

Numbered embodiment 10

The non-aqueous electrolyte composition according to numbered embodiment 1, in which the phosphorous-containing compounds include tris(trimethylsilyl) phosphite (TMSP).

Numbered embodiment 11

The non-aqueous electrolyte composition according to any one of numbered embodiments 1 to 10, in which the surfactants are selected from anionic surfactants, cationic surfactants, non-ionic (hydrophilic) surfactants and amphoteric (zwitterionic) surfactants.

Numbered embodiment 12

The non-aqueous electrolyte composition according to numbered embodiment 11, in which the surfactants include at least one non-ionic block copolymer surfactant.

Numbered embodiment 13

The non-aqueous electrolyte composition according to any of numbered embodiment 1 to 12, in which the first component comprises tetraglyme and diglyme, preferably in the weight ratio 1:1.

Numbered embodiment 14

An anode-free sodium cell comprising:

a cathode comprising one or more sodium-containing active materials;
an anode current collector;
a separator located between the cathode and the anode current collector; and
a non-aqueous electrolyte composition according to any one of numbered embodiments 1 to 13.

Numbered embodiment 15

An anode-free sodium cell according to numbered embodiment 14, in which the anode current collector includes one or more carbon-containing nucleation layers formed on a surface of the anode current collector, prior to an initial first charge cycle of the anode-free sodium cell.

Numbered embodiment 16

An anode-free sodium cell according any one of numbered embodiments 14 to 15, in which the one or more sodium-containing active materials are selected from sodium transition metal oxides, polyanionic compounds, and Prussian blue compounds (including analogues thereof).

Numbered embodiment 17

An apparatus comprising one or more anode-free sodium cells according to any one of numbered embodiments 14 to 16.

Numbered embodiment 18

A method of operating an anode-free sodium cell according any one of numbered embodiments 14 to 15.

Numbered embodiment 19

The method according to numbered embodiment 18, in which the anode-free sodium cell has a charge cut-off voltage of 4.0V or higher.

Numbered embodiment 20

The use of a non-aqueous electrolyte composition according to any one of numbered embodiments 1 to 13 in an anode-free sodium cell.

**Claims**

1. A non-aqueous electrolyte composition comprising:

> one or more sodium-containing salts selected from sodium tetrafluoroborate ($NaBF_4$), sodium hexafluorophosphate ($NaPF_6$), sodium trifluoromethanesulfonate ($CF_3NaSO_3$), sodium bis(fluorosulfonyl)imide ($Na(SO_2F)_2N$), sodium bis(trifluoromethanesulfonyl)imide ($C_2F_6NNaO_4S_2$), sodium bis(oxalate) ($NaB(C_2O_4)_2$), and sodium-difluoro(oxalato)borate; and
> a solvent system which comprises: a first component which comprises diglyme; and a second component which comprises one or more additives selected from:
>
>> • sulfur-containing compounds in an amount of no greater than about 10% by weight of the solvent system, wherein the sulfur-containing compounds are selected from sulfone-containing compounds, sulfate-containing compounds, and sulfonate-containing compounds;
>> • boron-containing compounds in an amount of no greater than about 20% by weight of the solvent system;
>> • nitrile-containing compounds in an amount of no greater than about 10% weight of the solvent system;
>> • phosphorous-containing compounds in an amount of no greater than about 10% by weight of the solvent system;
>> • surfactants in an amount of no greater than about 20% by weight of the solvent system; and
>
> wherein the total amount of one or more additives does not exceed about 20% by weight based on the weight of the solvent system.

2. The non-aqueous electrolyte composition according to claim 1, in which

> (a) the second component comprises two or more additives comprising boron-containing compounds in an amount of >0 to <20% by weight of the solvent system and surfactants in an amount of >0 to < 20% by weight of the solvent system, and in which the total amount of two or more additives does not exceed about 20% by weight based on the weight of the solvent system; or
> (b) the second component comprises three or more additives comprising sulfur-containing compounds in an amount of >0 to <10% by weight of the solvent system, boron-containing compounds in an amount of >0 to <20% by weight of the solvent system, and surfactants in an amount of >0 to < 20% by weight of the solvent system, and in which the total amount of three or more additives does not exceed about 20% by weight based on the weight of the solvent system.

3. The non-aqueous electrolyte composition according to claim 1 or 2, in which:

> (a) the sulfur-containing compounds are selected from: sulfolane, 3-methyl sulfolane, trimethyl sulfone, methyl phenyl sulfone, 1,3-propanediolcyclic sulfate (PCS), 1,5,2,4-dioxadithiane 2,2,4,4-tetraoxide, 1,3,2-Dioxathiolane 2,2-dioxide, 1-propene 1,3-sultone, and 1,3-propane sultone; or
(b) the sulfur-containing compounds include 1,3-propanediolcyclic sulfate (PCS).

4. The non-aqueous electrolyte composition according to claims 1 to 3, in which the boron-containing compounds are selected from borate-containing compounds and boroxine-containing compounds.

5. The non-aqueous electrolyte composition according to claim 4, in which the boron-containing compounds are selected from tris(trimethylsilyl) borate (TMSB), tris(2,2,2-trifluoroethyl) borate, trimethyl borate, triethyl borate, trimethoxyboroxine, and trimethylboroxine.

6. The non-aqueous electrolyte composition according to claim 1, in which:

(a) the nitrile-containing compounds include 1,3-6-hexanetricarbonitrile; or
(b) the phosphorous-containing compounds include tris(trimethylsilyl) phosphite (TMSP).

7. The non-aqueous electrolyte composition according to any one of claims 1 to 6, in which the surfactants are selected from anionic surfactants, cationic surfactants, non-ionic (hydrophilic) surfactants and amphoteric (zwitterionic) surfactants.

8. The non-aqueous electrolyte composition according to claim 7, in which the surfactants include at least one non-ionic block copolymer surfactant.

9. The non-aqueous electrolyte composition according to claims 1 to 8, in which the first component further comprises tetraglyme, preferably in the weight ratio of 1:1 with diglyme.

10. An anode-free sodium cell comprising:

a cathode comprising one or more sodium-containing active materials;
an anode current collector;
a separator located between the cathode and the anode current collector; and
a non-aqueous electrolyte composition according to any one of claims 1 to 9.

11. An anode-free sodium cell according to claim 10, in which:

(a) the anode current collector includes one or more carbon-containing nucleation layers formed on a surface of the anode current collector, prior to an initial first charge cycle of the anode-free sodium cell; and/or
(b) the one or more sodium-containing active materials are selected from sodium transition metal oxides, polyanionic compounds, and Prussian blue compounds (including analogues thereof).

12. An apparatus comprising one or more anode-free sodium cells according to any one of claims 10 to 11.

13. A method of operating an anode-free sodium cell according any one of claims 10 to 11.

14. The method according to claim 13, in which the anode-free sodium cell has a charge cut-off voltage of 4.0V or higher.

15. The use of a non-aqueous electrolyte composition according to any one of claims 1 to 9 in an anode-free sodium cell.

**Figure 1a**

**Figure 1b**

Figure 2a

Figure 2b

Figure 2c

Figure 3a

Figure 3b

Figure 4a

Figure 4b

Figure 5a

Figure 5b

Figure 6a

**Figure 6b**

**Figure 7a**

Figure 7b

Figure 8a

Figure 8b

Figure 9a

**Figure 9b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018151674 A
- US 20200058222 A
- WO 2020240209 A1
- GB 2019051022 W
- WO 2019197812 A1
- US 10550007 B